(19) Europäisches Patentamt
European Patent Office
Office européen des brevets

(11) **EP 4 432 118 A1**

(12) **EUROPEAN PATENT APPLICATION**

(43) Date of publication:
**18.09.2024 Bulletin 2024/38**

(21) Application number: **24160014.7**

(22) Date of filing: **27.02.2024**

(51) International Patent Classification (IPC):
**G06F 16/2458** (2019.01)    **G06F 16/9038** (2019.01)

(52) Cooperative Patent Classification (CPC):
**G06F 16/9038; G06F 16/2477**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **16.03.2023 JP 2023042101**

(71) Applicants:
• **Ricoh Company, Ltd.**
  **Tokyo 143-8555 (JP)**

• **RIKEN**
  **Wako-shi, Saitama 351-0198 (JP)**

(72) Inventors:
• **IKE, Kohichi**
  **Tokyo, 143-8555 (JP)**
• **SOMA, Wataru**
  **Saitama, 351-0198 (JP)**
• **AOYAMA, Hideaki**
  **Saitama, 351-0198 (JP)**

(74) Representative: **SSM Sandmair**
**Patentanwälte Rechtsanwalt**
**Partnerschaft mbB**
**Joseph-Wild-Straße 20**
**81829 München (DE)**

(54) **PROGRAM, INFORMATION PROCESSING SYSTEM, AND DATA PROCESSING SYSTEM**

(57)    A program causes an information processing system to function as a data acquirer configured to acquire data with which at least one of a year, a month, a date, an hour, a minute, or a second is associated; a data processor configured to extract at least one analysis target from the data acquired by the data acquirer; a graph creator configured to create a graph of a cumulative value of a value relating to the analysis target with respect to a period; an area calculator configured to calculate a first area formed by the graph and an x-axis; and a pattern identifier configured to identify a pattern of a graph shape based on the first area.

FIG.1

THESIS

TEXT ANALYSIS

NUMERICAL CONVERSION / SCORE CONVERSION

EP 4 432 118 A1

**Description**

BACKGROUND OF THE INVENTION

1. Field of the Invention

The present invention relates to a program, an information processing system, and a data processing system.

2. Description of the Related Art

There are cases where various analysis targets such as keywords included in time series data are extracted to analyze recent topics. For example, the appearance frequency of keywords is analyzed as a method to discover tendencies of trends, tides, and epidemics of the time. By analyzing the appearance frequency of each keyword, it is easy to discover talking points, topics, themes, popularity, and interesting events that have recently increased in various fields.

Techniques have been devised to present trends that are strongly related to an assembly of documents to be analyzed and documents to be analyzed that reflect trends (see, for example, Patent Document 1). Patent Document 1 discloses a system for obtaining the total number of words extracted from the documents to be analyzed, and extracting a trend by setting, as rapidly rising words, the most frequently appearing words in the past from documents to be analyzed whose creation date and time is close to the current date and time, and presenting the related documents that are highly related to the words to the user.

However, in the conventional technology, it is not analyzed how the value relating to the target to be analyzed changes with time. That is, in some cases, the appearance frequency of a keyword increases rapidly, and in other cases, the appearance frequency gradually increases with time, but in both cases, it has been simply determined that there is a keyword whose appearance frequency has increased.

In view of the above problems, the present invention provides a technique for analyzing how a value relating to an analysis target has transitioned.

Patent Document 1: Japanese Unexamined Patent Application Publication No. 2019-101591

SUMMARY OF THE INVENTION

According to one aspect of the present invention, there is provided a program that causes an information processing system to function as a data acquirer configured to acquire data with which at least one of a year, a month, a date, an hour, a minute, or a second is associated; a data processor configured to extract at least one analysis target from the data acquired by the data acquirer; a graph creator configured to create a graph of a cumulative value of a value relating to the analysis target with respect to a period; an area calculator configured to calculate a first area formed by the graph and an x-axis; and a pattern identifier configured to identify a pattern of a graph shape based on the first area.

According to one embodiment of the present invention, it is possible to provide a technique for analyzing how a value relating to an analysis target has transitioned.

BRIEF DESCRIPTION OF THE DRAWINGS

FIG. 1 is a diagram illustrating a flow of extracting a plurality of keywords from a thesis in a specific technical field to detect changes and signs according to an embodiment of the present invention;

FIG. 2 is a diagram schematically illustrating a technology and a cycle of a business using the technology with respect to time according to an embodiment of the present invention;

FIGS. 3A to 3C are diagrams for explaining a process for analyzing a transition until the appearance frequency of a predetermined keyword increases according to an embodiment of the present invention;

FIGS. 4A and 4B are examples of system configuration diagrams of a data processing system according to an embodiment of the present invention;

FIG. 5 is a diagram illustrating a hardware configuration of an example of an information processing system and a terminal apparatus according to an embodiment of the present invention;

FIG. 6 is a diagram illustrating an example of a functional configuration of a data processing system according to an embodiment of the present invention;

FIG. 7 is a diagram illustrating an example of data including keywords used for analyzing the transition of appearance frequency according to an embodiment of the present invention;

FIG. 8 is a diagram illustrating an example of data obtained by converting the appearance frequency of FIG. 7 into a cumulative value according to an embodiment of the present invention;

FIG. 9 is a diagram illustrating an example of data obtained by normalizing the cumulative value and the period of the data of FIG. 8 according to an embodiment of the present invention;

FIG. 10 is an example of a graph illustrating the transition of the appearance frequency of a keyword with the normalized period as the x-axis and the normalized cumulative value as the y-axis according to an embodiment of the present invention;

FIGS. 11A and 11B are examples of a word appearance frequency graph for two different keywords according to an embodiment of the present invention;

FIG. 12 is an diagram of several variations of a word appearance frequency graph with an area A1 of 0.5 according to an embodiment of the present invention;

FIGS. 13A and 13B are diagrams for explaining pattern analysis of the shape of a word appearance frequency graph by an area A1 and an area A2 according to an embodiment of the present invention;

FIG. 14 is a diagram illustrating an example of a plurality of word appearance frequency graphs in which the area A1 gradually changes according to an embodiment of the present invention;

FIG. 15 is an example of a scatter diagram of an area B2 with respect to an area A1 according to an embodiment of the present invention;

FIGS. 16A and 16B are diagrams illustrating an area A1 and an area B2 calculated for keywords having a certain appearance frequency or more on an eye map according to an embodiment of the present invention;

FIG. 17 is an example of a sequence diagram illustrating a process in which a data processing system analyzes a pattern of the transition of the appearance frequency of a keyword according to an embodiment of the present invention;

FIG. 18 is an example of a diagram illustrating the first appearance year, the total appearance frequency, the area A1, and the area A2 for the top 100 keywords in terms of the total appearance frequency, in ascending order according to the size of the area A1, with respect to keywords with a total appearance frequency of 10 or more according to an embodiment of the present invention;

FIGS. 19A and 19B are examples of a diagram illustrating the extraction rate of sign words among the top 100 keywords according to an embodiment of the present invention;

FIG. 20A illustrates the average value of a number of transactions per minute of a user's daily transactions, and FIG. 20B illustrates a graph in which the x-axis is normalized and the number of transactions is turned into a cumulative value according to an embodiment of the present invention;

FIGS. 21A and 21B illustrate the time on the x-axis expressed in U.S. Eastern Standard Time for the same transaction data as in FIGS. 20A and 20B according to an embodiment of the present invention; and

FIG. 22 is an example of a functional block diagram of a pattern analyzing apparatus using machine learning according to an embodiment of the present invention.

## DESCRIPTION OF THE EMBODIMENTS

Hereinafter, as an example of an embodiment of the present invention, an information processing system and a pattern analysis method performed by the information processing system will be described with reference to the drawings.

<Transition of time series data>

There are cases where it is desired to analyze what is currently being talked about or is likely to be talked about in a field based on the keywords used in this field. For example, if it is possible to detect changes and signs of what kind of technology is being talked about in a particular field of technology, it would be possible to respond quickly by selecting the technology as a future research topic.

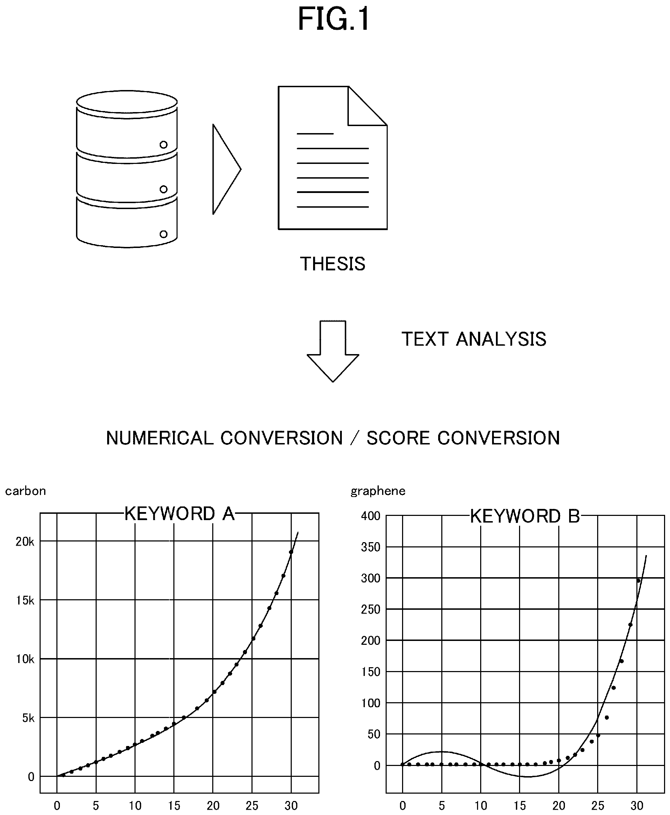

FIG. 1 illustrates the flow of extracting a plurality of keywords from a thesis in a particular field of technology and detecting changes and signs. Theses are typically prepared in a general field of technology, and, therefore, it is considered that the keywords in the theses represent changes in topics and technologies that are likely to be talked about in the future. Therefore, as illustrated in FIG. 1, it is effective for the information processing system, which will be described later, to extract keywords from a thesis and indicate how the appearance frequency of the keywords has transitioned with respect to a period. In FIG. 1, the transition of the appearance frequency of keywords A and B is illustrated, and it can be seen that the appearance frequency of the keyword A has gradually increased and that the appearance frequency of the keyword B has recently increased. For example, if a researcher can identify the keyword B, the researcher can consider selecting the keyword B as the next research topic.

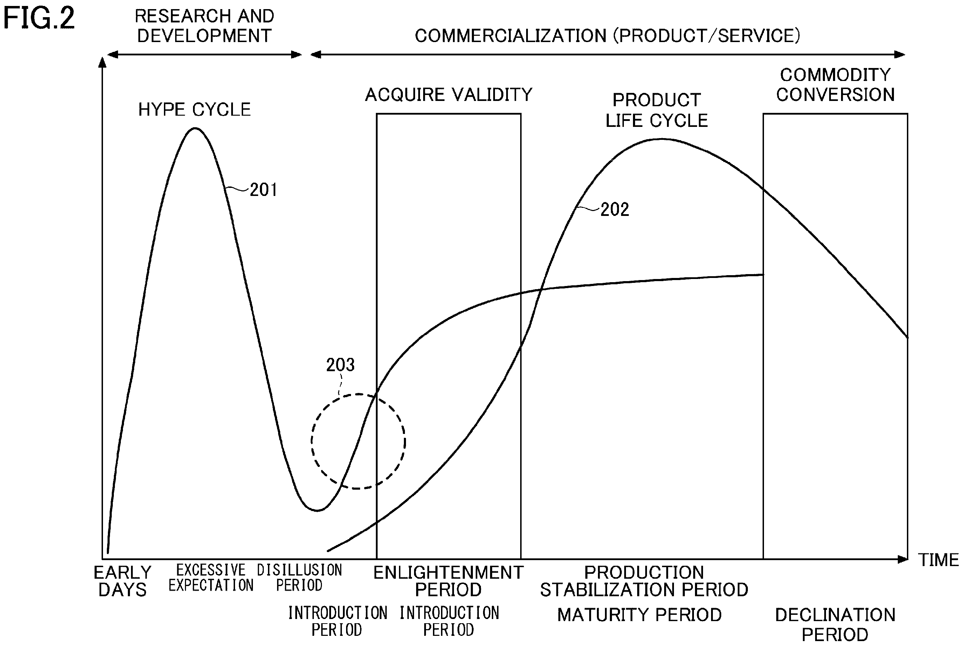

FIG. 2 is a diagram schematically illustrating a technology and a cycle of a business using the technology with respect to time. A line 201 indicates the maturity, the adoption, and the social applicability of a particular technology (this line is referred to as the hype cycle). As the line 201 indicates, in general, a technology is studied by many researchers on a trial basis in the early days so that the research progresses, and once the research progresses, the technology often fades. The technology is then commercialized when the technology is considered to have market prospects and profitability. The technology to be commercialized is researched again for producing products, etc., and commercialization (products and services) proceeds as indicated by a line 202. Therefore, a rising portion 203, after the line 201 has gone down, is the timing at which the technology has begun to be studied again. If a company can capture this rising portion 203, it will be advantageous in business because the technology can be commercialized early. The rising portion 203 can be a sign that the technology will be talked about in a practical sense, and the data analysis method of the present embodiment enables the capturing of this sign as an example.

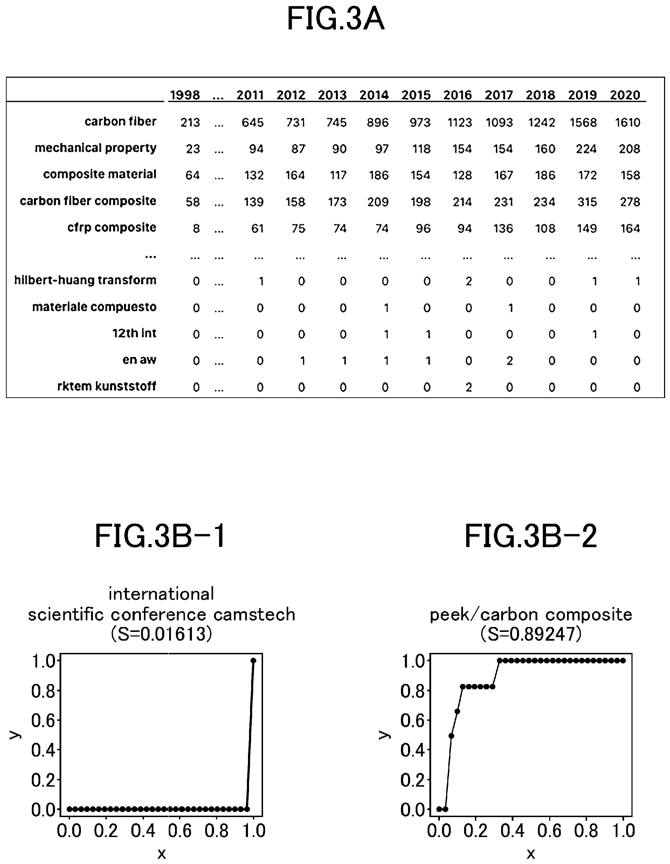

Next, an outline of the data analysis method of the present embodiment will be described with reference to FIGS. 3A to 3C. FIGS. 3A to 3C are diagrams for explaining a process for analyzing the transition until the appearance frequency of a predetermined keyword increases.

(1) As illustrated in FIG. 3A, as an example, the information processing system performs morphological analysis (spaced wording) on the titles of theses, and calculates the appearance frequency of each keyword by the publication year.

(2) The information processing system normalizes the publication year and the cumulative values of the appearance frequency of each keyword to 0 to 1 for each keyword, so that the transition of the appearance frequency of the keywords can be compared. As illustrated in FIGS. 3B-1 and 3B-2, a graph is obtained, with the year of publication x as the horizontal axis and the cumulative value of the appearance frequency y as the vertical axis. With this graph, the transition of the appearance frequency of a keyword is visualized. 3B-1 indicates that the appearance frequency has increased rapidly in recent years, and FIG. 3B-2 indicates that the appearance frequency has increased in the early period, but the keyword is rarely used in recent years.

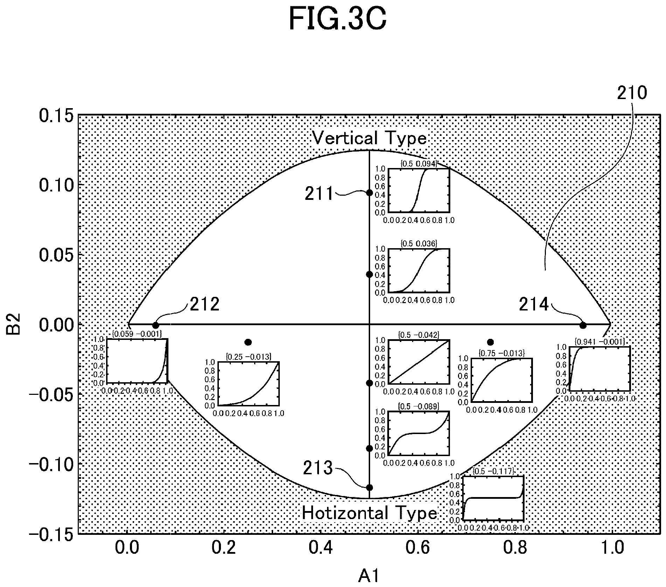

(3) The information processing system analyzes which pattern the graph shape of the graph in (2) is close to by using a map. Although the details will be described later, the information processing system calculates the area formed by the graph and the x-axis, and represents the pattern of the transition of appearance frequency for each keyword by the position in the map (FIG. 3C). Hereinafter, this map will be referred to as an eye-map 210. The eye-map 210 indicates a pattern of the transition of the appearance frequency of one keyword by the position (coordinate) of a data point (e.g., 211 to 214). The position of the data point determines how the appearance frequency has transitioned. For example, the keyword corresponding to the data point 212 at the left end of the eye-map 210 indicates "a keyword which has increased rapidly in recent years", the keyword corresponding to the data point 214 at the right end indicates "a keyword which increased in the past but hardly became popular", the keyword corresponding to the data point 211 at the top end indicates "a keyword for which the appearance frequency has increased rapidly in mid-course but is now obsolete", and the keyword corresponding to the data point 213 at the bottom end indicates "a keyword that has been around for a long time but has become obsolete and is starting to get renewed attention".

Therefore, the user can identify how the appearance frequency of the keyword has transitioned by determining where the data point of the keyword is located in the eye map 210. For example, the user can extract what kind of technology is being talked about or signs that the technology will be talked about in the future, in a specific technology field.

<About terminology>

Data is to include analysis targets such as keywords, numerical values, etc., that are analyzed for determining how the target transitions over time. Preferably, one or more of the year, the month, the date, the hour, the minute, and the second are associated with the data or the analysis target.

An analysis target is the target to be analyzed to determine how the target transitions over time, for example, keywords and numerical values.

The value relating to the analysis target may be not only a value directly included in the analysis target included in the data, but also some value that can be extracted by processing, such as a value obtained by processing the analysis target. In the present embodiment, the value relating to the analysis target is described in terms of the appearance frequency and the number of transactions.

Pattern analysis of a graph shape refers to a method of analyzing the shape of the graph by comparing the shape with a type (pattern) close to the graph shape. The pattern of the graph shape is also a variation pattern of the values relating to the analyzed target with respect to the period.

<System configuration example>

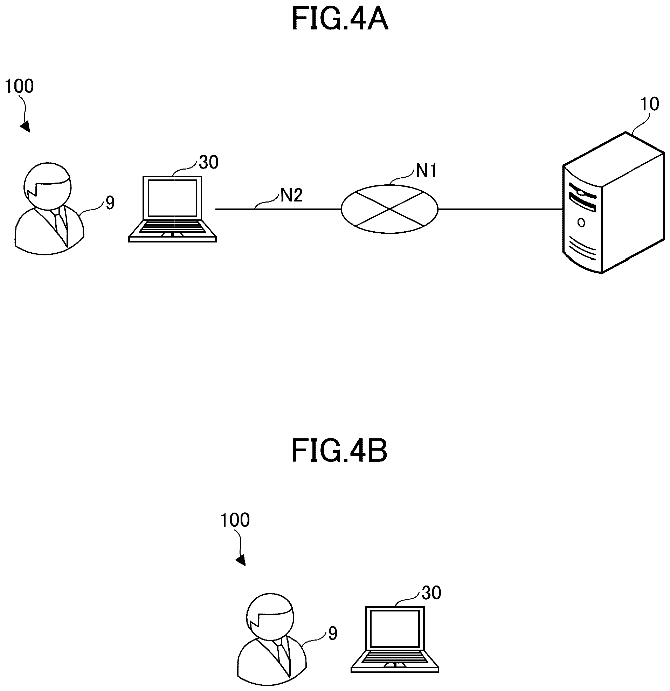

FIGS. 4A and 4B are examples of a system configuration diagram of a data processing system 100. The data processing system 100 includes an information processing system 10 and a terminal apparatus 30. However, the terminal apparatus 30 may be a general-purpose computer and may not be included in the data processing system 100.

The information processing system 10 and the terminal apparatus 30 are communicatively connected via a wide area network N1 such as the Internet. The information processing system 10 may be installed in a cloud, a data center, or the like, or may be installed on premises. The information processing system 10 may be a web server that returns processing results to the terminal apparatus 30 in response to a request from the terminal apparatus 30. The server is a computer or software that functions to provide information or processing results in response to a request from a client.

For example, the information processing system 10 extracts keywords from data (e.g., titles of a plurality of documents) specified by a user 9 with the terminal apparatus 30, and presents the transition of the appearance frequency of each keyword in the eye map 210. Alternatively, the information processing system 10 presents, in the eye map 210, for example, how the appearance frequency of a keyword specified by the user with the terminal apparatus 30 has transitioned in certain data.

The information processing system 10 may have a data storage device in which data specified by the user for analysis is stored in advance. Alternatively, the information processing system 10 may acquire data from a data server or NAS (Network Attached Storage). The information processing system 10 may acquire data by web scraping from a network. Alternatively, the user may transmit data to be analyzed from the terminal apparatus 30 to the information processing system 10.

The information processing system 10 may support cloud computing. Cloud computing is a mode of use in which resources on a network are used without considering specific hardware resources. Therefore, the information processing system 10 need not be an apparatus housed in a single case or provided as a single unit. The functions of the information processing system 10 may be distributed among a plurality of information processing apparatuses, or each of a plurality of information processing apparatuses may have all functions, and the information processing apparatuses may be switched according to load balancing or the like.

The terminal apparatus 30 is arranged in a facility such as a company, an educational institution, or a factory, and is connected to a network N2. The network N2 may be a Local Area Network (LAN), a Wi-Fi (registered trademark), a wide-area Ethernet (registered trademark), a mobile phone network such as 4G, 5G, 6G, or the like.

The terminal apparatus 30 is a general-purpose computer used by a user. Here, the user is a person who uses the information processing system 10. Therefore, the person who uses the information processing system 10 may be a person who wants to analyze the transition of the appearance frequency of keywords, etc. The user may include a person who registers the data to be analyzed in the information processing system 10, etc.

In the terminal apparatus 30, a web browser or a native application that is exclusively used for the information processing system 10 operates. When the terminal apparatus 30 executes the web browser, the terminal apparatus 30 and the information processing system 10 execute a web application. The web application is an application that operates by cooperation between a program in a programming language (e.g., JavaScript) operating on the web browser and a program on the web server (the information processing system 10) side. When the web application is executed, the information processing system 10 may analyze the transition of the appearance frequency of the keyword, or the terminal apparatus 30 receiving the web application may perform the analysis.

An application that is not executed unless the application is installed in the terminal apparatus 30 is referred to a native application. In the present embodiment, the application executed in the terminal apparatus 30 may be a web application or a native application. In this case also, the information processing system 10 may analyze the transition of the keyword appearance frequency, or the terminal apparatus 30 may perform the analysis by using a native application.

In the present embodiment, the information processing system 10 will be described as analyzing the transition of the keyword appearance frequency, but as illustrated in FIG. 4B, the terminal apparatus 30 alone may analyze the data. In this case, the terminal apparatus 30 operates a native application that analyzes the transition of the appearance frequency of the keyword included in the data. However, the terminal apparatus 30 may acquire data from a data server on the network. Therefore, even in the configuration of FIG. 4B, it is preferable that the terminal apparatus 30 can be connected to the network.

The terminal apparatus 30 is, for example, a desktop personal computer (PC), a notebook PC, a smartphone, a personal digital assistant (PDA), a tablet terminal, or the like used by a user. Further, the terminal apparatus 30 may be an apparatus in which a web browser or a native application operates. The terminal apparatus 30 may be an electronic blackboard, a video conference terminal, or the like.

The present embodiment will be described based on the configuration of FIG. 4A unless otherwise mentioned.

<Example of hardware configuration>

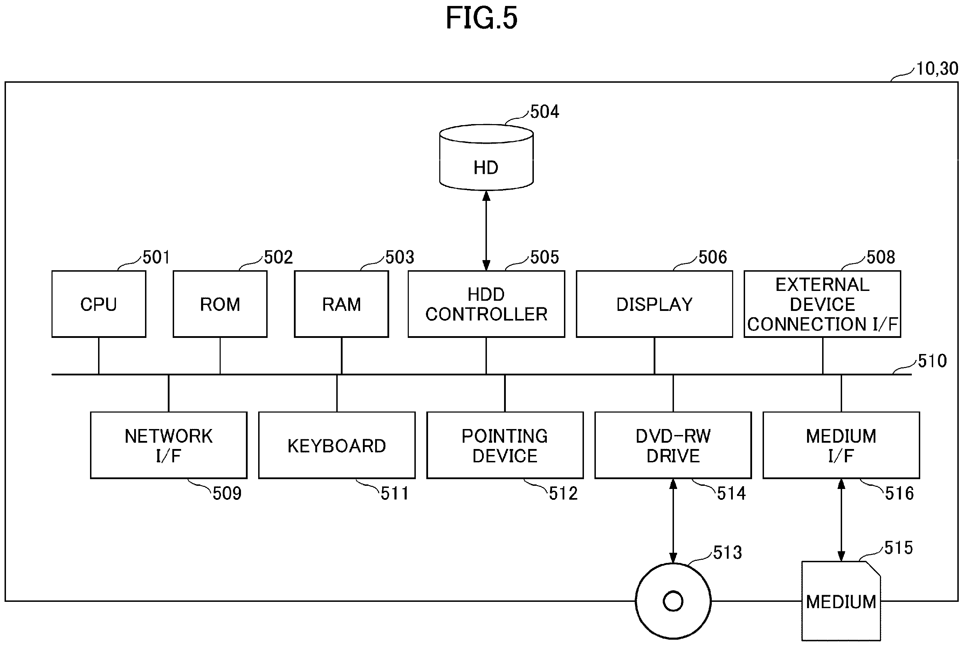

With reference to FIG. 5, the hardware configuration of the information processing system 10 and the terminal apparatus 30 included in the data processing system 100 according to the present embodiment will be described.

<<Information processing system and terminal apparatus>>

FIG. 5 is a diagram illustrating an example of a hardware configuration of the information processing system 10 and the terminal apparatus 30 according to the present embodiment. As illustrated in FIG. 5, the information processing system 10 and the terminal apparatus 30 are constructed by a computer 500 and include a central processing unit (CPU) 501, a read-only memory (ROM) 502, a random access memory (RAM) 503, a Hard Disk (HD) 504, a Hard Disk Drive (HDD) controller 505, a display 506, an external device connection interface (I/F) 508, a network I/F 509, a bus line 510, a keyboard 511, a pointing device 512, a Digital Versatile Disk Rewritable (DVD-RW) drive 514, and a medium I/F 516.
Among these, the CPU 501 controls the operation of the entire information processing system 10 and the terminal apparatus 30. The ROM 502 stores programs used to drive the CPU 501 such as an initial program loader (IPL). The RAM 503 is used as a work area of the CPU 501. The HD 504 stores various kinds of data such as programs. The HDD controller 505 controls the reading or writing of various kinds of data with respect to the HD 504 in accordance with the control of the CPU 501. The display 506 displays various kinds of information such as cursors, menus, windows, characters, or images. The external device connection I/F 508 is an interface for connecting various external devices. In this case, the external device is, for example, a Universal Serial Bus (USB) memory or a printer. The network I/F 509 is an interface for data communication using the network N2. The bus line 510 is an address bus, data bus, or the like for electrically connecting each element illustrated in FIG. 5 such as the CPU 501.
The keyboard 511 is a type of input means having a plurality of keys used for inputting characters, numbers, or various instructions. The pointing device 512 is a type of input means for selecting and executing various instructions, selecting a processing target, moving a cursor, and the like. The DVD-RW drive 514 controls the reading or writing of various kinds of data with respect to the DVD-RW 513 as an example of a removable recording medium. The DVD-RW drive 514 is not limited to being used for a DVD-RW, but may be used for a Digital Versatile Disc Recordable (DVD-R) or the like. The medium I/F 516 controls the reading or writing (storage) of data with respect to a recording medium 515 such as a flash memory.

<Functions>

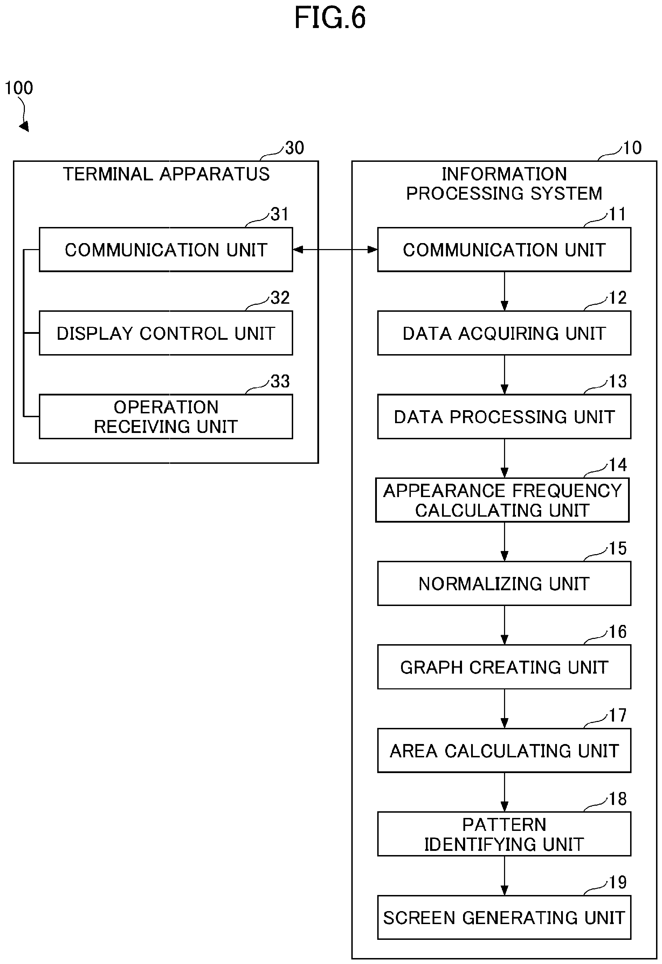

Next, a functional configuration of the data processing system 100 according to the present embodiment will be described with reference to FIG. 6. FIG. 6 is a diagram illustrating an example of a functional configuration of the data processing system 100 according to the present embodiment.

<<Functional configuration of information processing system>>

The information processing system 10 includes a communication unit 11, a data acquiring unit 12, a data processing unit 13, an appearance frequency calculating unit 14, a normalizing unit 15, a graph creating unit 16, an area calculating unit 17, a pattern identifying unit 18, and a screen generating unit 19. Each of these units is a function or means for functioning that is implemented as any of the elements illustrated in FIG. 5 operates by an instruction from the CPU 501 in accordance with a program loaded in the RAM 503. Further, details of each function will be described later with reference to the figures.
The communication unit 11 transmits and receives various kinds of information with the terminal apparatus 30. In the present embodiment, the communication unit 11 transmits a web application and an eye map as an analysis result to the terminal apparatus 30, and receives various operation contents and instructions from the user.
The data acquiring unit 12 acquires data including a keyword that is an analysis target for which the transition of the appearance frequency is to be analyzed. The data acquiring unit 12 may receive data from the terminal apparatus 30 or may acquire data from a network access server (NAS) or a data server. The data acquiring unit 12 may acquire data by web scraping.
If necessary, the data processing unit 13 performs morphological analysis on the data and converts the data into a regular expression to extract keywords. The data processing unit 13 may extract keywords from a predetermined column of a table, and morphological analysis may not be necessary. For example, morphological analysis may not be necessary when the data format is clearly written in a table format (XML, JSON, CSV, etc.).
The appearance frequency calculating unit 14 counts the appearance frequency of each keyword obtained by morphological analysis for each unit period and converts the appearance frequency into a cumulative value for the period. The unit period is a period for counting the appearance frequency and is one year in the thesis analysis described later. The unit period may be appropriately set according to the target of analysis or the purpose, such as month, date, hour, minute, and second. The period is the total period from the beginning to the end of the unit period.

The normalizing unit 15 normalizes the cumulative value and the period so that the minimum value is 0 and the maximum value is 1 for each keyword. The period to be normalized may be the same for all keywords, even if the first appearance year, etc., differs depending on the keyword.

The graph creating unit 16 creates a graph (a word appearance frequency graph to be described later) with the period as the x-axis and the cumulative value of the appearance frequency as the y-axis for each keyword. The graph creating unit 16 also creates a graph whose y-axis is the square of the cumulative value in the graph so that the pattern of the transition of the appearance frequency can be distinguished. A graph in which the cumulative value of the original graph is squared is referred to as a square function.

The area calculating unit 17 calculates the area (this area is referred to as A1) formed by the graph and the x-axis (the area A1 is an example of the first area). The area calculating unit 17 calculates the area (this area is referred to as A2) formed by the square function and the x-axis (the area A2 is an example). By obtaining the area A2 (the area A2 is an example of the second area), it becomes easier to distinguish the pattern of the transition of the appearance frequency of a keyword for which the pattern is difficult to distinguish only by the area A1. Further, the area calculating unit 17 converts the area A2 into an area B2 for the eye map (the area B2 is an example of the third area).

The pattern identifying unit 18 creates a scatter diagram with the area A1 as the x-axis and the area A2 as the y-axis, and arranges the data points of the area A2 corresponding to the area A1 on the scatter diagram. Similarly, the pattern identifying unit 18 creates a scatter diagram with the area A1 as the x-axis and the area B2 as the y-axis, and arranges the data points of the area B2 corresponding to the area A1 on the scatter diagram. Both scatter diagrams indicate the trend of how the appearance frequency has increased according to the positions of the data points, so that the user can identify how the appearance frequency of any keyword has transitioned by the positions of the data points.

The screen generating unit 19 generates screen information displayed by the terminal apparatus 30. When the terminal apparatus 30 executes a web application, the screen information is created by HTML, XML, CSS (Cascade Style Sheet), JavaScript (registered trademark), etc. When the terminal apparatus 30 executes a native application, the screen information is held by the terminal apparatus 30, and the displayed information is transmitted by XML, etc.

«Terminal apparatus»

The terminal apparatus 30 is used by a user who wants to analyze the transition of the appearance frequency of keywords. The terminal apparatus 30 includes a communication unit 31, a display control unit 32, and an operation receiving unit 33. Each of these units is a function or means for functioning that is implemented as an instruction included in one or more programs installed in the terminal apparatus 30 is executed by the CPU 501. The program can be a web application executed by a web browser or an exclusive-use native application.

The communication unit 31 transmits and receives various kinds of information with the information processing system 10. In the present embodiment, the communication unit 31 receives screen information such as a web application or the eye map 210 from the information processing system 10, and transmits the user's operation contents and instructions to the information processing system 10.

The display control unit 32 interprets screen information of various screens and displays the screen information on the display 506. The operation receiving unit 33 receives various operations of the user on various screens displayed on the display 506.

<Normalization of appearance frequency>

Hereinafter, the flow of pattern analysis performed by the information processing system 10 will be described in detail with reference to the figures. In the following, the processing in which the information processing system 10 analyzes the transition of the appearance frequency of keywords included in a technical document, by using the technical document as data, will be described as an example. However, the data analysis method of the present embodiment can be suitably applied to other examples as long as the data (time series data) includes at least one of a year, month, date, hour, minute, and second. Further, the analysis method is not limited to the transition of the appearance frequency of keywords, but it is also possible to analyze the transition of any value in the time series.

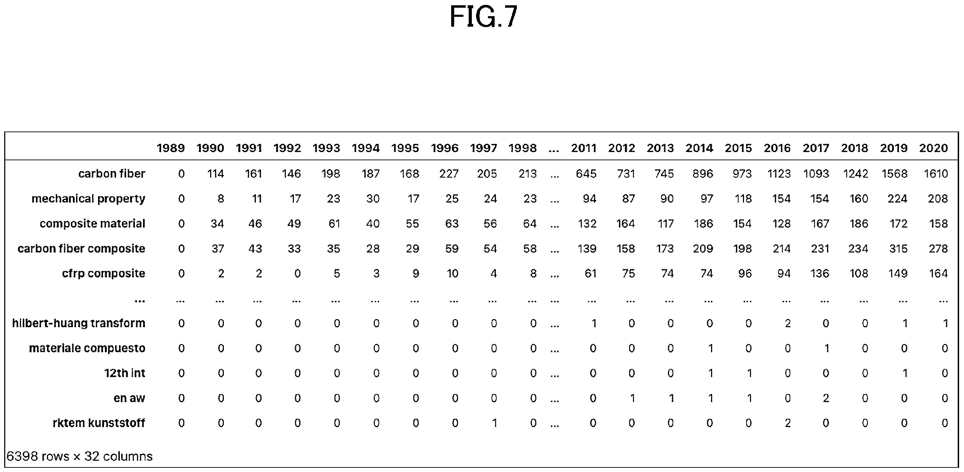

FIG. 7 illustrates an example of data including keywords used for the analysis of the transition of the appearance frequency. The data acquiring unit 12 acquires a file as data on a network or from the terminal apparatus 30. The data processing unit 13 extracts a title (text data) and the publication year of a thesis from a file specified by a user, for example, and performs morphological analysis on the title as necessary. In FIG. 7, a composite word having one meaning by a plurality of keywords is acquired, but in the present embodiment, this is simply referred to as a keyword. As a matter of course, the appearance frequency of a single keyword can also transition. The appearance frequency calculating unit 14 calculates the appearance frequency for each keyword according to the publication year (an example of a unit period).

In FIG. 7, as an example, the appearance frequency of each keyword is indicated for each year of publication from 1989 to 2020. In FIG. 7, the appearance frequency per year is calculated, but the unit period for calculating the appearance frequency may be any period, such as every month, every week, every day, or the like. Further, multiple years may be one unit period. Further, when an hour, a minute, or a second is associated with a keyword of the data to be analyzed, the unit period for calculating the appearance frequency may be an hour, a minute, or a second.

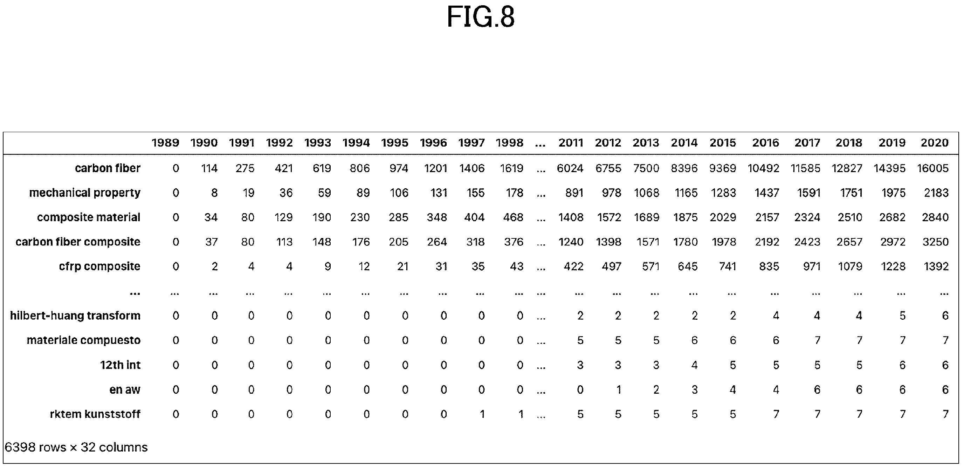

Next, as illustrated in FIG. 8, the appearance frequency calculating unit 14 converts the data of FIG. 7 into a cumulative value. FIG. 8 illustrates data in which the appearance frequency of FIG. 7 is converted into a cumulative value. Because the value is a cumulative value, the appearance frequency does not decrease with respect to the period. By using a cumulative value, the pattern of the transition of the appearance frequency does not decrease with respect to the period, so the pattern analysis becomes easy.

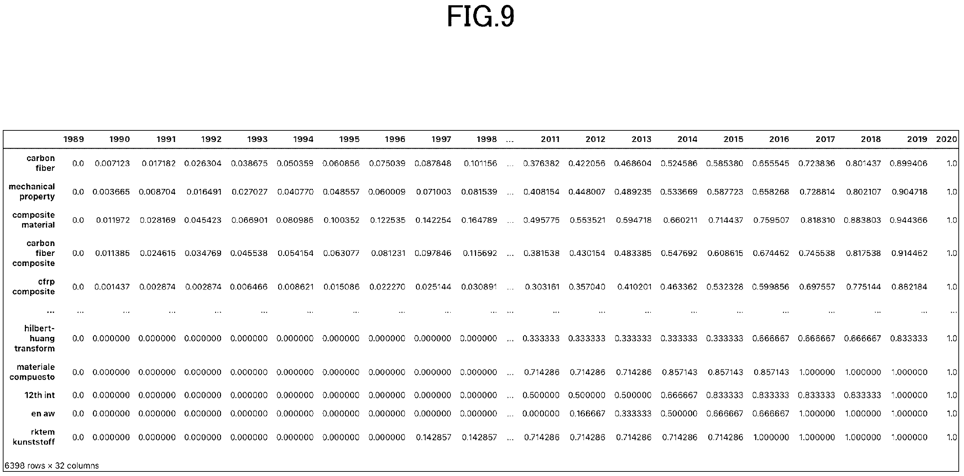

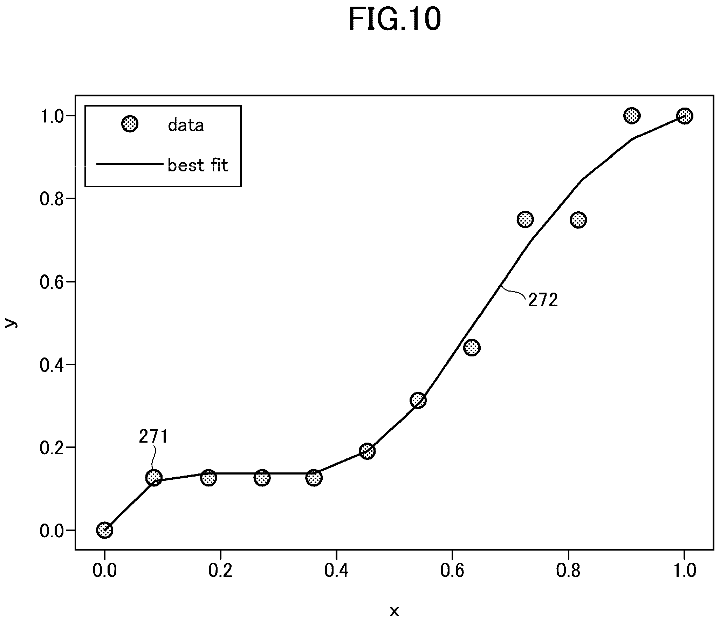

Next, as illustrated in FIGS. 9 and 10, the normalizing unit 15 normalizes the cumulative value and the period so that the minimum value is 0 and the maximum value is 1, respectively. FIG. 9 illustrates data in which the cumulative value and the period of the data in FIG. 8 are normalized, respectively. For the period, the normalizing unit 15 assigns, for example, 2020-1989=31 years to 0 to 1. For the cumulative value, the normalizing unit 15 assigns, for each keyword, the difference between the maximum value and the minimum value of the cumulative value of the keyword to 0 to 1.

FIG. 10 is a graph illustrating the transition of the appearance frequency of a certain keyword, with the normalized period as the x-axis and the normalized cumulative value as the y-axis. In FIG. 10, a data point 271 is the cumulative value of each publication year, and the approximate curve of each data point 271 is illustrated as a graph 272. Hereinafter, a line graph connecting each data point 271 is referred to as a "word appearance frequency graph". Note that the word appearance frequency graph may be an approximate curve of the data points 271.

The cumulative value is normalized in order to facilitate comparison between keywords even if the appearance frequency of keywords is different. By normalizing the cumulative value and the period, the area formed by the keyword appearance frequency graph and the x-axis can also be normalized, and this area can be used to perform pattern analysis with respect to the transition of the appearance frequency.

<Calculation of area>

Next, the area formed by the word appearance frequency graph and the x-axis will be described as one of the methods to quantitatively handle the graph shape of the word appearance frequency graph.

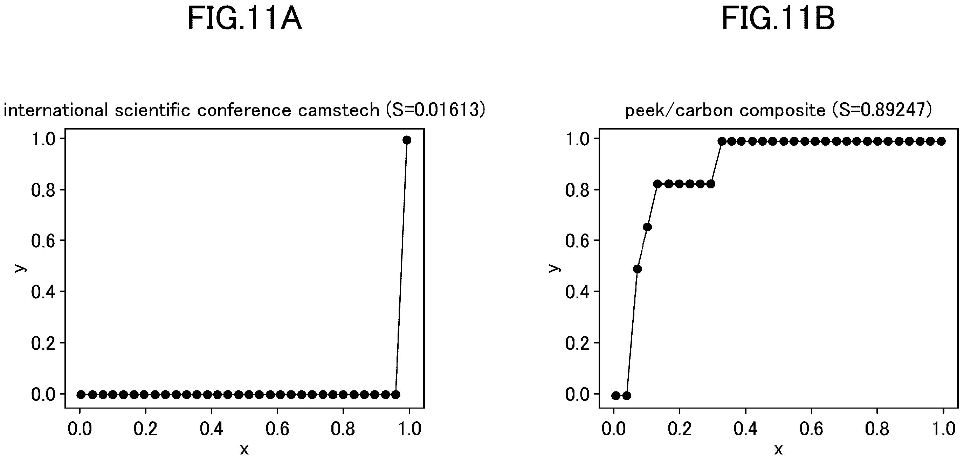

FIGS. 11A and 11B illustrate a word appearance frequency graph for two different keywords. FIG. 11A is a word appearance frequency graph for the keyword (composite word) "international scientific conference camstech" and FIG. 11B is a word appearance frequency graph for the keyword (composite word) "peek/carbon composite".

The graph shape of the word appearance frequency graph illustrated in FIG. 11A is an example of a shape in which the appearance frequency of a keyword has increased rapidly in recent years (end of a certain period). FIG. 11B is an example of a graph shape in which the appearance frequency of a keyword has increased in an early period (the start of a certain period) but rarely appears in recent years (end of a certain period). Comparing the two word appearance frequency graphs, it can be seen that the area formed by the word appearance frequency graph and the x-axis is very different. Therefore, by calculating this area, the area calculating unit 17 can extract a keyword indicating signs of rapid growth in recent years.

An area calculation method will be described below. The area calculating unit 17 may perform what is referred to as integration with respect to the word appearance frequency graph. Here, a method of obtaining the area by trapezoidal approximation will be explained. The area between any of two data points according to the trapezoidal approximation is calculated by formula (1). The notation of S is the area of the trapezoid, y is the cumulative value, and x is the period.
[Formula 1]

$$\Delta S_i = \frac{(y_i + y_{i+1}) \times \Delta x}{2} \qquad \cdots (1)$$

The sum I of each trapezoid is calculated by formula (2) .
[Formula 2]

$$I = \frac{(y_0 + y_1) \times \Delta x}{2} + \frac{(y_1 + y_2) \times \Delta x}{2} + _{...}$$

$$\frac{(y_{n-2} + y_{n-1}) \times \Delta x}{2} + \frac{(y_{n-1} + y_n) \times \Delta x}{2} \qquad \cdots (2)$$

By rewriting the sum I, formula (3) is obtained.

[Formula 3]

$$I = \left( \frac{y_0}{2} + \sum_{i=1}^{n-1} y_i + \frac{y_n}{2} \right) \times \Delta x \qquad \cdots (3)$$

Assuming that $y_0$=0 and $y_n$=1, the sum I can be expressed by formula (4). The sum I is the area A1 formed by the word appearance frequency graph and the x-axis.

[Formula 4]

$$I = \left( \sum_{i=0}^{n} y_i - \frac{1}{2} \right) \times \Delta x \qquad \cdots (4)$$

<< Area of square function>>

As explained with reference to FIGS. 11A and 11B, the difference in the transition of the appearance frequency illustrated in FIGS. 11A and 11B can be identified by the size of the area. That is, when the area is extremely small or large, the shape variation of the word appearance frequency graph is small and can be identified by the area A1. However, even if the area A1 is the same, the shape of the word appearance frequency graph may be very different.

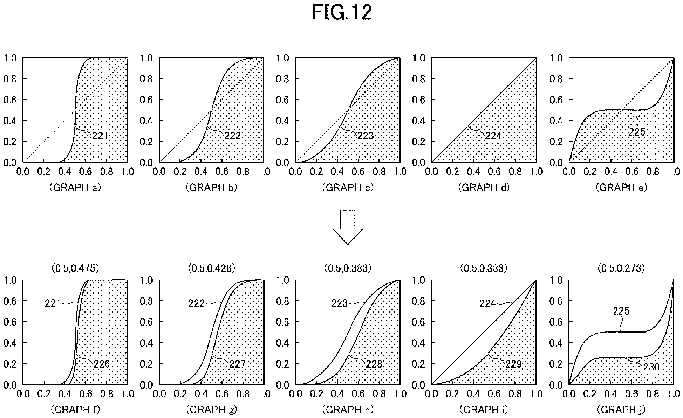

FIG. 12 illustrates some variations of the word appearance frequency graph having the area A1 of 0.5. The word appearance frequency graphs 221 to 225 of (a) to (e) in FIG. 12 are all different in shape, but all have the area A1 of 0.5. As described above, when the area A1 is close to 0.5, the difference in the transition of the appearance frequency cannot be identified by the area A1 alone.

Therefore, in the present embodiment, the graph creating unit 16 creates a graph whose y-axis value is the square (referred to as the square function) of the word appearance frequency graph. In FIG. 12, (f) to (j) illustrate the square functions 226 to 230 with respect to the word appearance frequency graphs 221 to 225 of (a) to (e) in FIG. 12, respectively. The area calculating unit 17 calculates the area formed by each of the square functions 226 to 230 and the x-axis (this is also referred to as the second moment). Hereinafter, the area formed by the square function and the x-axis is referred to as the area A2.

In the word appearance frequency graphs 221 225 which are the original graphs of (f) to (j) in FIG. 12, the area A1 is 0.5, but it can be seen that the area A2 of the square function is different from each other. That is, there is a relationship of the area A2 (0.475) in FIG. 12 (f) > the area A2 (0.428) in FIG. 12 (g) > the area A2 (0.383) in FIG. 12 (h) > the area A2 (0.333) in FIG. 12 (i) > the area A2 (0.273) in FIG. 12 (j).

Therefore, even for the word appearance frequency graphs 221 to 225 whose area is close to 0.5, by using the area A2 of the square function, the transition of the keyword appearance frequency can be identified.

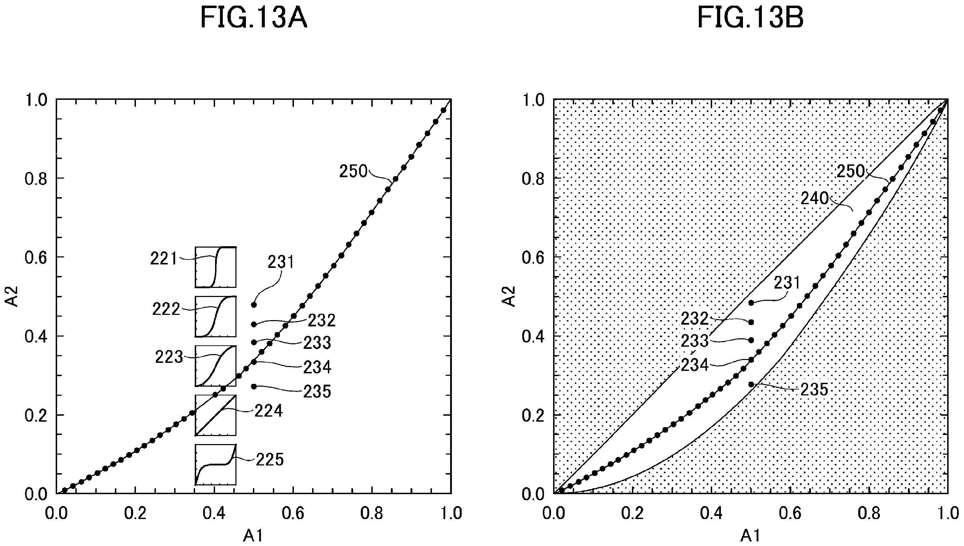

FIGS. 13A and 13B are diagrams for explaining the pattern analysis of the shape of the word appearance frequency graph by the area A1 and the area A2. FIG. 13A illustrates the area A2 of the word appearance frequency graph having the area A1 of 0.5, at the data points 231 to 235. The graphs (a) to (e) in FIG. 12 were used as the word appearance frequency graphs having the area A1 of 0.5. The data point 231 is the area A2 of the word appearance frequency graph 221, the data point 232 is the area A2 of the word appearance frequency graph 222, the data point 233 is the area A2 of the word appearance frequency graph 223, the data point 234 is the area A2 of the word appearance frequency graph 224, and the data point 235 is the area A2 of the word appearance frequency graph 225. With respect to any keyword, according to which data point (231 to 235) of the word appearance frequency graph the data point of the area A2 is close to, it is possible to analyze which pattern the shape of the word appearance frequency graph is close to.

FIG. 13B illustrates a range 240 in which the area A2 may be for all the areas A1. Similar to the case where the area A1 is 0.5, the range 240 is obtained by dividing the range (0 to 1) of the area A1 into several pieces and preparing several word appearance frequency graphs each of which having the area A1. For example, by preparing several variations of the word appearance frequency graph in which the area A1 becomes 0.1 (variations as illustrated in FIG. 12 (a) in which the area A1 becomes 0.1) and calculating the area A2 of each word appearance frequency graph, the upper and lower limits of the range of the area A2 at the area A1=0.1 is obtained. When the same processing is performed for each of the areas A1 0.2 to 1.0, the range 240 is obtained.

The word appearance frequency graph used as a variation in the calculation of the area A2 is known, and, therefore, it is possible to analyze which pattern the shape of the word appearance frequency graph of any keyword is close to, according to where the data point of the area A2 of any keyword is located in the range 240. The pattern identifying unit 18 associates the shape of the word appearance frequency graph with an existing pattern by arranging the data points in the range 240. The data point at the lower left of the range 240 corresponds to the graph shape of FIG. 11A, and the data point at the upper right of the range 240 corresponds to the graph shape of FIG. 11B.

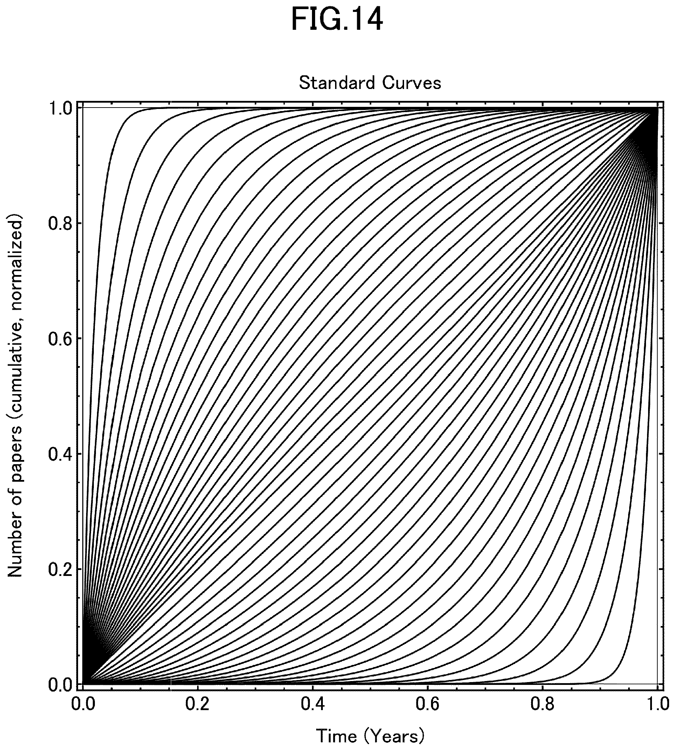

A supplemental explanation will be given with respect to the graph 250 of FIGS. 13A and 13B. FIG. 14 illustrates a plurality of word appearance frequency graphs in which the area A1 gradually changes. The word appearance frequency graph of FIG. 14 is a standard one among the graph shapes illustrating each area A1. The graph 250 of FIGS. 13A and 13B is a scatter diagram of the area A1 and the area A2 calculated from each word appearance frequency graph of FIG. 14.

<<Eye map>>

Although pattern analysis is possible even when a scatter diagram of the area A1 and the area A2 is created as illustrated in FIGS. 13A and 13B, when the area A2 on the vertical axis is converted, further detailed pattern analysis becomes possible. First, a method for converting the area A2 will be described.

The area calculating unit 17 converts the area A2 into an area B2 using by the formula (5).

[Formula 5]

$$\left( A1, \qquad B2 = A2 - \frac{A1 + A1^2}{2} \right) \qquad \cdots (5)$$

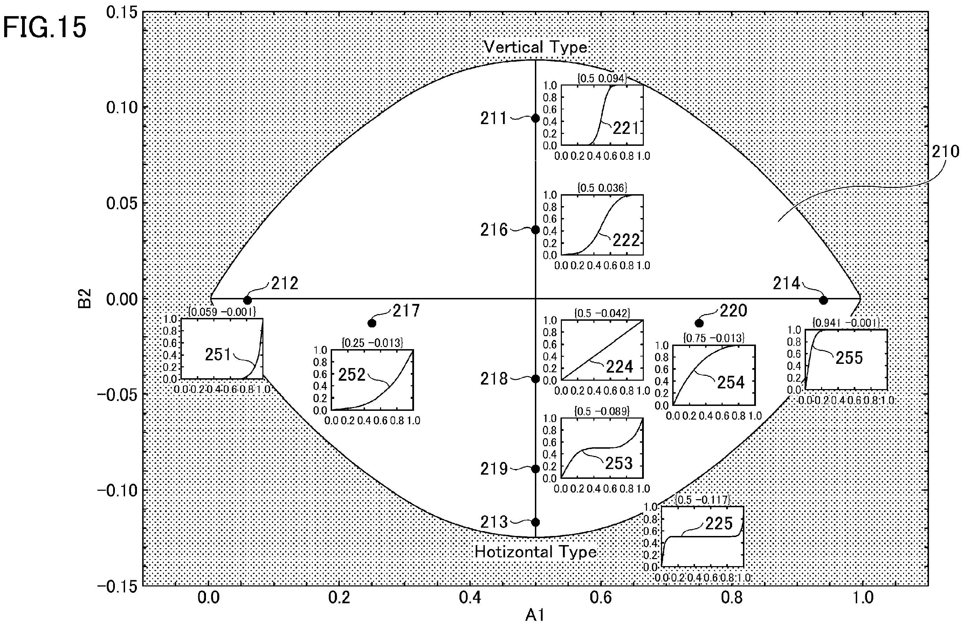

FIG. 15 illustrates a scatter diagram of the area B2 with respect to the area A1. In FIG. 15, the eye map 210 corresponds to the range 240 in FIG. 13B. All data points of the area B2 with respect to the area A1 are included in the eye map 210. The scatter diagram of FIG. 15 is referred to as the eye map 210 because of the shape thereof. The eye map 210 corresponds to the range 240, and, therefore, the eye map 210 is an expansion of the range 240 of FIG. 13B in a symmetrical manner in the vertical direction and the horizontal direction, and detailed pattern analysis is possible.

FIG. 15 illustrates data points of several word appearance frequency graphs.

The data point 211 corresponds to the word appearance frequency graph 221.

The data point 216 corresponds to the word appearance frequency graph 222.

The data point 218 corresponds to the word appearance frequency graph 224.

The data point 219 corresponds to the word appearance frequency graph 253.

The data point 213 corresponds to the word appearance frequency graph 225.

The data point 212 corresponds to the word appearance frequency graph 251.

The data point 217 corresponds to the word appearance frequency graph 252.

The data point 220 corresponds to the word appearance frequency graph 254.

The data point 214 corresponds to the word appearance frequency graph 255.

Therefore, the transition of the appearance frequency of the keyword can be applied to a pattern according to the position of the data point (coordinates in the eye map 210). The pattern identifying unit 18 associates the shape of the word appearance frequency graph with an existing pattern by arranging the data point in the eye map 210. For example, the following pattern analysis is possible according to the position of the data point. The keyword of the data point 212 at the left end indicates "a keyword that is rapidly increasing in recent years (the end of a certain period)", the keyword of the data point 214 at the right end indicates "a keyword which increased in the past (the start of a certain period) but hardly became popular", the keyword of the data point 211 at the top end indicates "a keyword for which the appearance frequency has increased rapidly in mid-course (the middle of a certain period) but is now obsolete", and the keyword of the data point 213 at the bottom end indicates "a keyword that has been around for a long time (the start of a certain period) but has become obsolete and is starting to get renewed attention (the end of a certain period)".

Further, the association between the position of the data point and the shape of the word appearance frequency graph is known, and, therefore, it is possible to analyze which pattern the shape of the word appearance frequency graph of a given keyword is close to according to where the data point of the given keyword is located in the eye map 210. Further, it is possible to identify the rough transition of the appearance frequency even for keywords (technical themes) which are not so familiar.

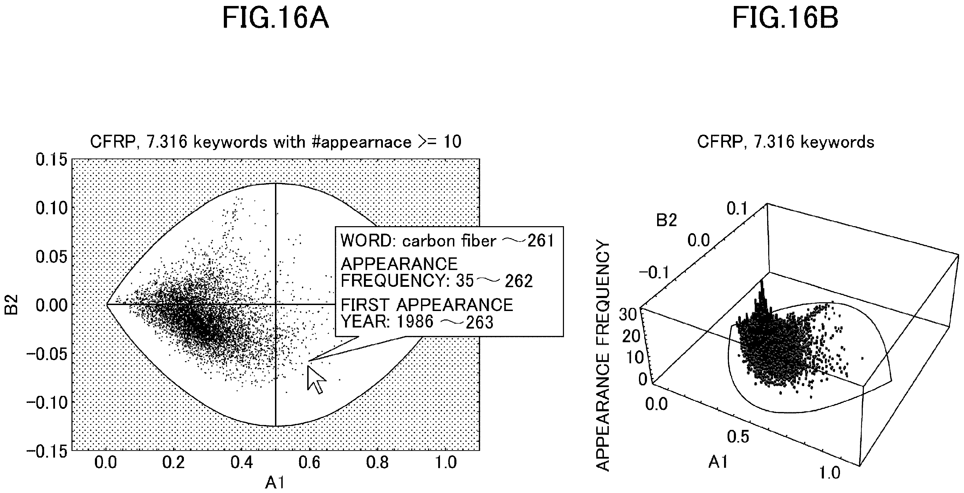

FIGS. 16A and 16B illustrate the area A1 and the area B2 calculated for keywords having a certain appearance frequency or more on the eye map 210. FIGS. 16A and 16B illustrate the analysis results of keywords extracted from a plurality of theses in the technical field of CFRP (Carbon Fiber Reinforced Plastics). Keywords with a small appearance frequency are hidden. FIG. 16A illustrates the eye map 210 in which one data point represents one keyword. The user can identify the trend of the transition of the appearance frequency of each keyword. FIG. 16B illustrates the appearance frequency of each keyword (the cumulative value of the final appearance frequency) as a bar graph on the eye map 210. In this way, the user can identify which pattern the transition of the appearance frequency is close to for keywords with a large appearance frequency and keywords with a small appearance frequency.

When the user clicks any data point with a mouse cursor or the like, a keyword 261 corresponding to the data point, an appearance frequency 262, and a first appearance year 263, etc., are displayed. The user can confirm the keyword represented by the data point, the appearance frequency, and the first appearance year.

<Processing or operation>

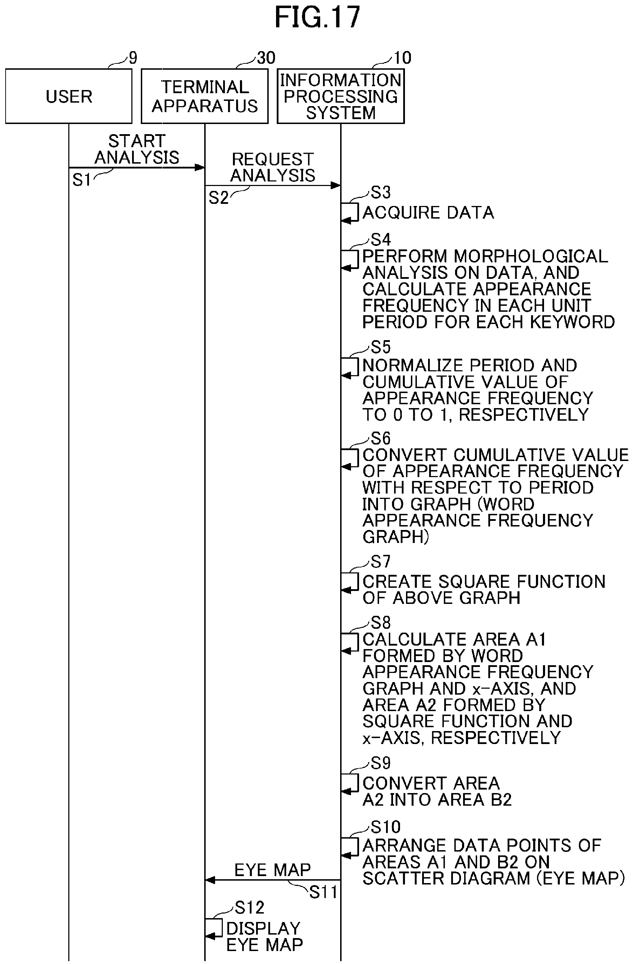

FIG. 17 is a sequence diagram illustrating a process in which the data processing system 100 performs pattern analysis on the transition of the appearance frequency of the keyword.

S1: A user connects the terminal apparatus 30 to the information processing system 10 and causes the terminal apparatus 30 to execute a web application. With respect to the web application executed by the terminal apparatus 30, the user specifies data and instructs the start of analysis of the transition of the appearance frequency with respect to the keywords included in the data.

S2: The operation receiving unit 33 of the terminal apparatus 30 receives the instruction, and the communication unit 31 transmits the specification of data and the analysis request to the information processing system 10. The communication unit 31 may transmit the data per se.

S3: The communication unit 11 of the information processing system 10 receives the analysis request, and the data acquiring unit 12 acquires the data to be analyzed. The data acquiring unit 12 may receive the data per se from the terminal apparatus 30 or may acquire the data from the network.

S4: Next, the data processing unit 13 performs morphological analysis on the data, and the appearance frequency calculating unit 14 calculates the appearance frequency in each unit period for each keyword. Depending on the data format, morphological analysis may not be necessary.

S5: Next, the normalizing unit 15 normalizes the period and the cumulative value of the appearance frequency to 0 to 1, respectively.

S6: Next, the graph creating unit 16 converts, into a graph, the cumulative value of the appearance frequency with respect to a period (creates a word appearance frequency graph).

S7: Similarly, the graph creating unit 16 creates a square function of the word appearance frequency graph.

S8: The area calculating unit 17 calculates the area A1 formed by the word appearance frequency graph and the x-axis, and the area A2 formed by the square function and the x-axis, respectively.

S9: The area calculating unit 17 converts the area A2 into the area B2. As explained with reference to FIGS. 13A and 13B, when pattern analysis is performed with the area A2, the processing in step S9 is unnecessary.

S10: The pattern identifying unit 18 arranges the data points of the area B2 corresponding to the area A1 on a scatter diagram (creating the eye map 210). When analyzing with the area A2, the pattern identifying unit 18 arranges the data points of the area A2 corresponding to the area A1 on a scatter diagram.

S11: The screen generating unit 19 of the information processing system 10 creates a screen for displaying the eye map 210, and the communication unit 11 transmits the screen information to the terminal apparatus 30.

S12: The communication unit 31 of the terminal apparatus 30 receives the screen information, and the display control unit 32 displays the screen including the eye map 210 on the display 506.

<Verification of pattern analysis by eye map>

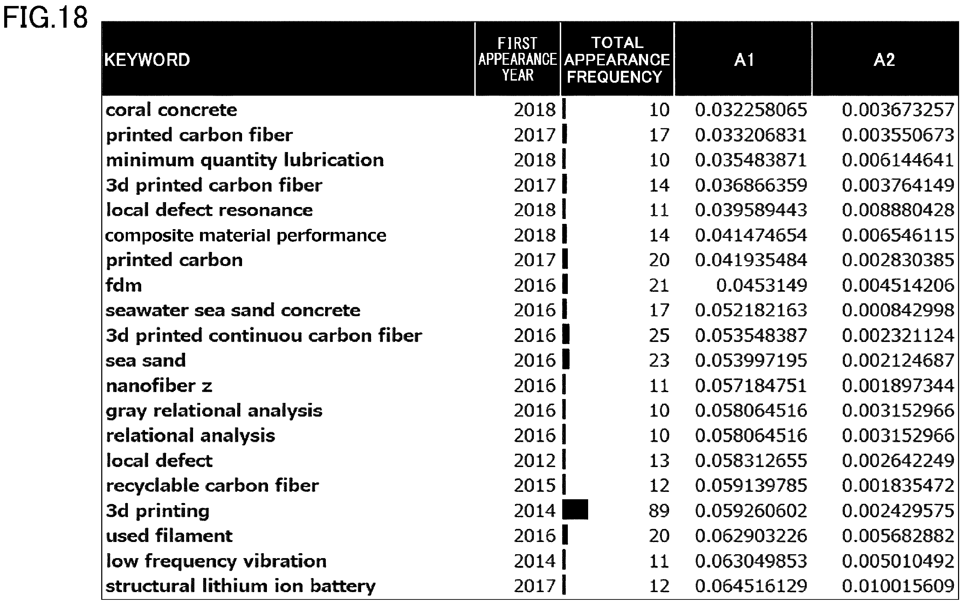

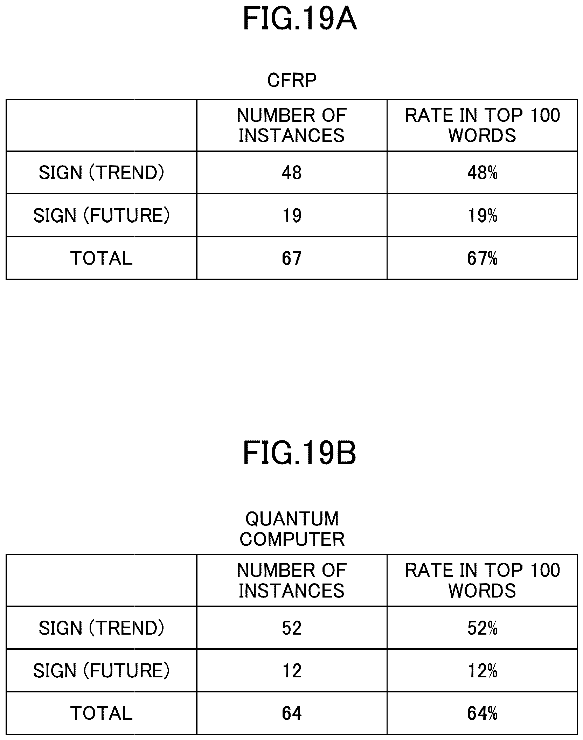

Next, an example of verification of pattern analysis by the eye map 210 will be described on the basis of FIGS. 18 and 19. An example of verification of whether a keyword having a small area A1 is a keyword that has recently become a topic or is likely to become a topic in the future, will be described. That is, it will be verified whether the analysis method of the present embodiment captures the signs of a technology that has recently become a topic of attention or is likely to become a topic of attention in the future.

FIG. 18 illustrates the first appearance year, the total appearance frequency, the area A1, and the area A2 for the top 100 keywords in terms of the total appearance frequency, in ascending order according to the size of the area A1, with respect to keywords with a total appearance frequency of 10 or more. The technical field is Carbon Fiber Reinforced Plastics (CFRP). The area A1 of these 100 keywords is small, and, therefore, it is presumed that these are keywords that have been recently talked about or are likely to be talked about in the future. The information processing system 10 also performed a similar analysis in the technical field of quantum computers.

FIGS. 19A and 19B illustrate the extraction rate of sign keywords among the top 100 keywords. FIGS. 19A and 19B illustrate the number and rate of how many keywords among the 100 keywords are recently being talked about or are likely to be talked about in the future. The rate is the extraction rate. FIG. 19A illustrates the extraction rate of keywords that have recently become a topic being talked about or are likely to become a topic being talked about in theses in which CFRP is a technical field. FIG. 19B illustrates the extraction rate of keywords that have recently become a topic being talked about or are likely to become a topic being talked about in theses in which quantum computers are a technical field. Experts in each field determined whether each keyword has recently become a topic being talked about or is likely to become a topic being talked about in the future. In FIGS. 19A and 19B, a keyword that has recently become a topic being talked about is indicated as "sign (trend)" and a keyword that is likely to become a topic being talked about in the future is indicated as "sign (future)".

As illustrated in FIGS. 19A and 19B, in both CFRP and quantum computers, the rate (extraction rate) of the sign keywords exceeds 60% among the top 100 keywords extracted by the data analysis method of the present embodiment, and it can be seen that the keywords useful for searching a prospective area can be extracted by the area A1. In FIGS. 19A and 19B, the threshold of the total appearance frequency is set to 10 or more, but the optimal condition may be set appropriately.

<Examples of analysis of data other than theses>

The data analysis method of the present embodiment can be suitably applied to time series data including a value to which one or more of the year, month, date, hour, minute, and second is associated. In the following, as an example, a method for estimating a user's affiliation (country or region) from transaction data of a user's crypto asset (an example of a financial commodity) will be described. The financial commodity may be stocks, investment trusts, bonds, commodity futures, FX (Foreign Exchange), etc.

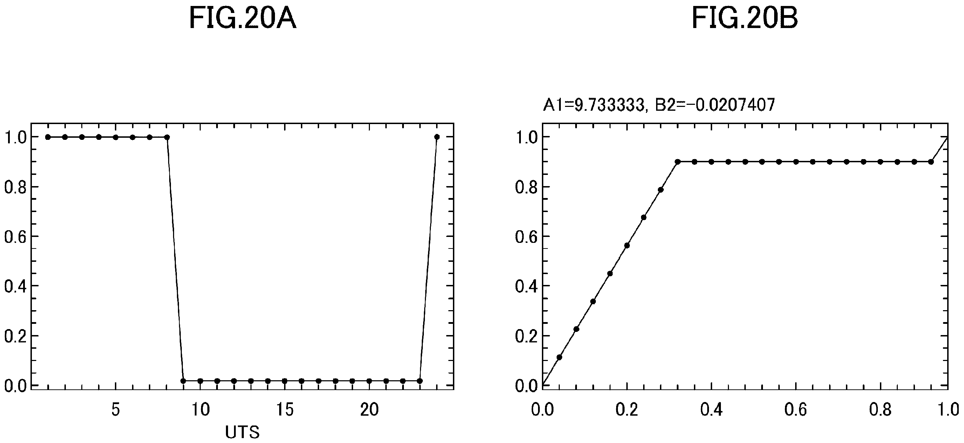

FIG. 20A illustrates the average value of the number of transactions per minute of a user's daily transactions (e.g., every hour). The x-axis is the base time (world time (UTS)), and the y-axis is the average value of the number of transactions per minute. In FIG. 20A, it is assumed that a user in Japan makes a certain number of transactions from 9:00 AM to 5:00 PM.

FIG. 20B is a graph (corresponding to the above word appearance frequency graph) in which the x-axis is normalized and the average value of the number of transactions is set to a cumulative value. The area A1 and the area B2 of the transaction data in FIG. 20B are 0.733333 and 0.0207407, respectively.

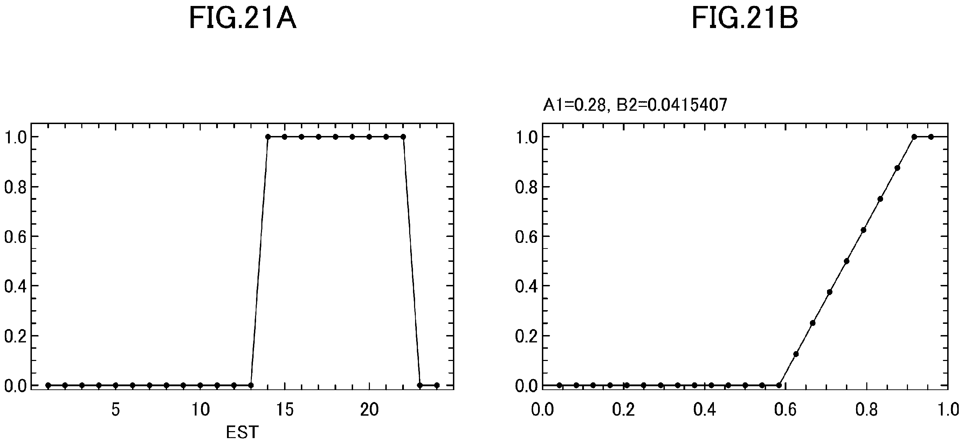

In FIGS. 21A and 21B, the base time on the x-axis is expressed by U.S. Eastern Standard Time (EST) for the same transaction data as in FIGS. 20A and 21B. The area A1 and area B2 of the transaction data in FIG. 21B are 0.28 and 0.0415407, respectively.

Comparing the graphs in FIG. 20B and FIG. 21B, the shapes are different, but the difference in the shapes appears in the areas A1 and B2. Therefore, the location of the user's affiliation can be estimated by where the data point corresponding to the transaction data is located in the eye-map 210, similar to the case of the appearance frequency of keywords.

<Pattern analysis using machine learning>

In the present embodiment, the information processing system 10 performs pattern analysis by creating a scatter diagram of the area A2 or B2 with respect to the area A1 of the word appearance frequency graph, but pattern analysis may be performed using machine learning.

Machine learning is a technology for allowing a computer to acquire human-like learning abilities, and refers to a technology in which a computer autonomously generates an algorithm necessary for determination such as data identification, etc., from previously captured learning data, and applies the algorithm to new data to make predictions. The learning method for machine learning may be any one of supervised learning, unsupervised learning, semi-supervised learning, reinforcement learning, or deep learning, and may be a learning method combining these learning methods, regardless of the learning method for machine learning. Machine learning methods include perceptron, deep learning, support vector machine, logistic regression, naive Bayes, decision tree, random forest, etc., and are not limited to the methods described in the present embodiment.

For example, deep learning is an algorithm that predicts XYZ based on the input data ABC, and then adjusts the weights between the neural networks by an error back-propagation method to reduce the error with the teacher data. More specifically, a manager prepares training data in which a word appearance frequency graph (coordinate) is input and identification information of a region divided into several eye maps 210 is set as a set of correct answer data, and a machine learning unit learns the association between the word appearance frequency graph and the identification information of the region.

The boosting decision tree is an algorithm for independently learning a plurality of weak identification devices such as a decision tree, integrating prediction results by the plurality of weak identification devices by using majority voting, and outputting the result as a prediction result of the whole (strong identification device). In this case, the machine learning unit creates a plurality of different decision trees for classifying word appearance frequency graphs (coordinates) into region identification information using the same training data, and outputs the final region identification information by these majority votes.

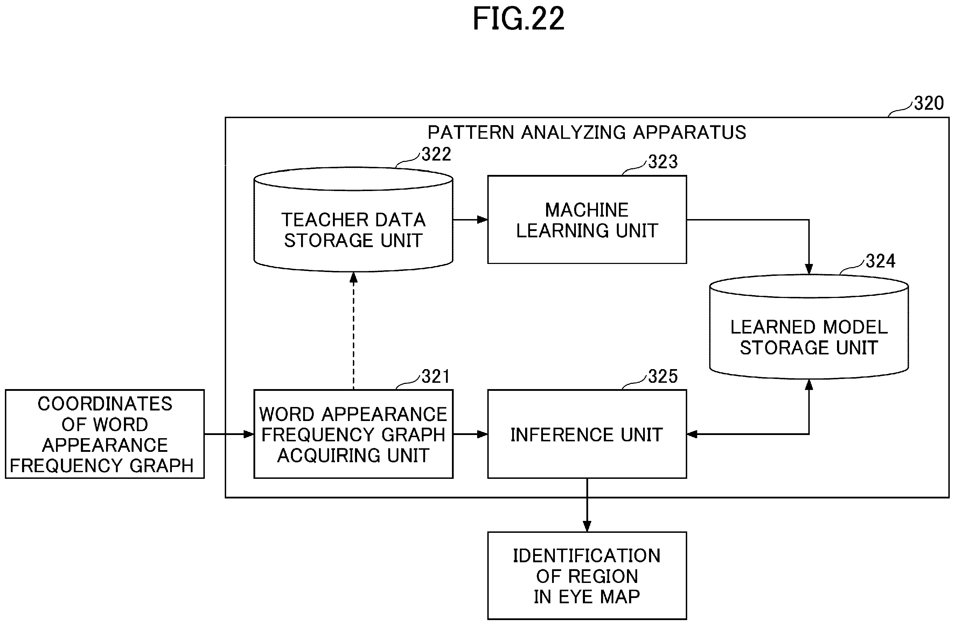

FIG. 22 is a functional block diagram of the pattern analyzing apparatus 320 using machine learning. As illustrated in FIG. 22, the pattern analyzing apparatus 320 may include a word appearance frequency graph acquiring unit 321, a teacher data storage unit 322, a machine learning unit 323, a learned model storage unit 324, and an inference unit 325. Each of these units will be described below. The word appearance frequency graph acquiring unit 321 acquires a word appearance frequency graph created by the graph creating unit 16.

<Learning phase>

A teacher data storage unit 322 stores teacher data for machine learning. The teacher data in the teacher data storage unit 322 is the coordinates (input) of the word appearance frequency graph and the identification information (output) of the region in the eye map 210 acquired and accumulated by the word appearance frequency graph acquiring unit 321 for a certain period.

The machine learning unit 323 generates a learned model for deriving the identification information of the region to be output from the received coordinates of the word appearance frequency graph. Specifically, the machine learning unit 323 performs machine learning by using the teacher data using the received coordinates of the word appearance frequency graph as input data and the identification information of the correct region to which the word appearance frequency graph is to be classified as output data, and generates the learned model. The machine learning unit 323 stores the generated learned model in the learned model storage unit 324. The learned model storage unit 324 stores the learned model generated by the machine learning unit 323.

<Inference phase>

The inference unit 325 acquires coordinates of the current word appearance frequency graph and infers identification information of a region where keywords are arranged in the eye map 210. Specifically, the inference unit 325 acquires the coordinates of the word appearance frequency graph from the word appearance frequency graph acquiring unit 321. The inference unit 325 inputs the coordinates of the word appearance frequency graph to the learned model in the learned model storage unit 324, and outputs identification information of the region where the keywords are arranged in the eye map 210.

<Main effects>

As described above, the data processing system of the present embodiment can normalize the time series data, calculate the area A1 with the x-axis and the area A2 or B2 of the square function, and create a scatter diagram of the area A2 or B2 with respect to the area A1 to analyze the pattern of how the time series data has transitioned. For example, it is possible to extract what kind of technology is being talked about in a specific technical field and signs that a technology will be talked about in the future, thereby increasing the possibility of early commercialization.

<Other application examples>

Although the preferable modes for implementing the present invention have been described above by using embodiments, the present invention is not limited in any way to such embodiments, and various variations and substitutions can be made within the scope not departing from the gist of the present invention.

For example, in the present embodiment, pattern analysis is performed on the transition of the appearance frequency of the keyword included in the data, but pattern analysis may be performed on the transition of the appearance frequency of a keyword specified by the user. In this case, the information processing system 10 only needs to perform pattern analysis for one keyword.

The keyword may not be converted into text. The information processing system 10 may, for example, recognize audio data recorded at various meetings, and perform pattern analysis on the transition of the appearance frequency of the keyword included in the audio data. The user can analyze what topics have transitioned in what pattern at various meetings. Further, the information processing system 10 may recognize the audio data of a conversation in a call at a call center and perform pattern analysis on the transition of the appearance frequency of the keywords included in the conversation. The user can improve the system and the service by analyzing which keywords have many inquiries.

Further, as an example of scraping by the information processing system 10, there are contents of posts on SNS, and keywords can be extracted from the contents of posts. The information processing system 10 can identify a keyword that is currently being talked about.

In the present embodiment, the cumulative value of the appearance frequency is obtained, and, therefore, the word appearance frequency graph does not decrease with respect to the period, but the pattern analysis may be performed by rotating the word appearance frequency graph by 180°.

In the present embodiment, the graph creating unit 16 creates the word appearance frequency graph, etc., but the graph created in the present embodiment does not need to be visualized. That is, the graph illustrated in the present embodiment is for illustrative purposes and does not need to be displayed if the areas A1, A2, and B2 can be calculated. However, by displaying the word appearance frequency graph and the like together with the eye map 210, the user can visually confirm the shape of the word appearance frequency graph.

In the present embodiment, as an example of the analysis target, the transition of the appearance frequency of a keyword included in the title of a thesis in a technical field is analyzed by pattern analysis, and the transition of the number of transactions of a crypto asset is analyzed by pattern analysis, but the analysis target is not limited to these. For example, a thesis does not need to be relevant to a technical field, but as long as the document is in the form of a thesis, the thesis may instead be relevant to medicine, pharmacy, philosophy, art, literature, language, history, geography, anthropology, law, politics, economy, society, education, psychology, mathematics, physics, astronomy, chemistry, energy, biochemistry, agricultural chemistry, civil engineering, sports, etc.

If keywords are included, the data is not limited to a thesis. The data can be books, magazines, minutes, daily reports, accounting documents, etc. The keyword can be a proper noun such as a person's name, a place name, a company name, etc.

The data can be image data. In this case, a recognition apparatus converts the subject in the image data into a keyword. For example, the information processing system 10 performs optical character recognition processing on the image data to extract the keyword. Alternatively, the information processing system 10 may recognize the number of pedestrians and vehicles from the image data and extract these numbers and the photographing date and time. The information processing system 10 can perform pattern analysis on how the number of pedestrians and vehicles transitions within a predetermined time. The information processing system 10 can similarly analyze the number of subjects that change over time, other than the number of pedestrians or vehicles.

Furthermore, the configuration example of FIG. 6, etc., indicated in the above embodiment is divided according to the main functions to facilitate the understanding of processes by the terminal apparatus 30 and the information processing system 10. The present invention is not limited by how the process units are divided or the names of the process units. The processes of the terminal apparatus 30 and the information processing system 10 may be further divided into many process units according to the process contents. Furthermore, the process units may be divided such that a single process unit further includes many processes.

Also, the apparatus group described in the examples are merely indicative of one of a plurality of computing environments for carrying out the embodiments disclosed herein. In some embodiments, the information processing system 10 includes a plurality of computing devices, such as server clusters. The plurality of computing devices are configured to communicate with each other via any type of communication link, including networks, a shared memory, and the like, and perform the processes disclosed herein.

Further, the information processing system 10 may be configured to share various combinations of processing steps, such as in FIG. 17 disclosed in the present embodiment. For example, a process executed by a predetermined unit may be executed by a plurality of information processing apparatuses included in the information processing system 10. The information processing system 10 may be organized into a single server apparatus or may be divided into a plurality of apparatuses.

The functions of each of the embodiments described above may be implemented by one or more processing circuits. As used herein, a "processing circuit" includes a processor programmed to execute each function by software such as a processor implemented in an electronic circuit; or devices such as an Application Specific Integrated Circuit (ASIC), a digital signal processor (DSP), a field programmable gate array (FPGA), and a conventional circuit module, designed to execute each function as described above.

**Claims**

1. A program that causes an information processing system to function as:

   a data acquirer configured to acquire data with which at least one of a year, a month, a date, an hour, a minute, or a second is associated;
a data processor configured to extract at least one analysis target from the data acquired by the data acquirer;
a graph creator configured to create a graph of a cumulative value of a value relating to the analysis target with respect to a period;
an area calculator configured to calculate a first area formed by the graph and an x-axis; and
a pattern identifier configured to identify a pattern of a graph shape based on the first area.

2. The program according to claim 1,
   wherein

   the area calculator calculates a second area formed by a square function of the graph and the x-axis, and
   the pattern identifier identifies the pattern of the graph shape based on positions of data points in a scatter diagram in which an x-axis represents the first area and a y-axis represents the second area.

3. The program according to claim 1,
   wherein

   the area calculator calculates a second area formed by a square function of the graph and the x-axis, and uses the first area formed by the graph and the x-axis and the second area to convert the second area into a third area by a following formula (6) where A1 represents the first area, A2 represents the second area, and B2 represents the third area, and [Formula 6]

$$B2 = A2 - \frac{A1 + A1^2}{2} \qquad \cdots (6)$$

   the pattern identifier identifies the pattern of the graph shape based on positions of data points in a scatter diagram in which an x-axis represents the first area and a y-axis represents the thrid area.

4. The program according to claim 2,
   wherein

   the pattern identifier identifies that the graph shape is a pattern in which the value relating to the analysis target increases at a start of the period but the value is minimum at an end of the period, in response to determining that the positions of the data points in the scatter diagram in which the x-axis represents the first area and the y-axis represents the second area are at a top right position, and
   the pattern identifier identifies that the graph shape is a pattern in which the value relating to the analysis target rapidly increases at the end of the period, in response to determining that the positions of the data points are at a bottom left position.

5. The program according to claim 3,
   wherein the pattern identifier identifies that the graph shape is a pattern in which the value relating to the analysis target increases at a start of the period but the value is minimum at an end of the period, in response to determining that the positions of the data points in the scatter diagram in which the x-axis represents the first area and the y-axis represents the third area are at a right end position.

6. The program according to claim 3,
   wherein the pattern identifier identifies that the graph shape is a pattern in which the value relating to the analysis target rapidly increases at an end of the period, in response to determining that the positions of the data points in the scatter diagram in which the x-axis represents the first area and the y-axis represents the third area are at a left end position.

7. The program according to claim 3,
   wherein the pattern identifier identifies that the graph shape is a pattern in which the value relating to the analysis target rapidly increases at a middle of the period but the value is minimum at an end of the period, in response to determining that the positions of the data points in the scatter diagram in which the x-axis represents the first area and the y-axis represents the third area are at a top end position.

8. The program according to claim 3,
wherein the pattern identifier identifies that the graph shape is a pattern in which the value relating to the analysis target increases from a start of the period but temporarily decreases, and then the value relating to the analysis target increases at an end of the period, in response to determining that the positions of the data points in the scatter diagram in which the x-axis represents the first area and the y-axis represents the third area are at a bottom end position.

9. The program according to any one of claims 1 to 8, wherein

the analysis target is a keyword included in the data, and
the value is an appearance frequency of the keyword.

10. The program according to any one of claims 1 to 8, wherein

the analysis target is information of a transaction of a financial commodity included in the data, and
the value is a number of the transactions.

11. The program according to any one of claims 2 to 8, wherein the program further causes the information processing system to function as:

a screen generator configured to generate a screen for displaying the scatter diagram; and
a communicator configured to transmit screen information of the screen to a terminal apparatus via a network.

12. The program according to claim 3,
wherein

the analysis target is information of a transaction of a financial commodity included in the data, the value is a number of the transactions, and the information of the transaction is associated with a standard time, and
the pattern identifier identifies a region of a different standard time at which the transaction is performed, based on the positions of the data points in the scatter diagram in which the x-axis represents the first area and the y-axis represents the third area.

13. An information processing system comprising:

a data acquirer configured to acquire data with which at least one of a year, a month, a date, an hour, a minute, or a second is associated;
a data processor configured to extract at least one analysis target from the data acquired by the data acquirer;
a graph creator configured to create a graph of a cumulative value of a value relating to the analysis target with respect to a period;
an area calculator configured to calculate a first area formed by the graph and an x-axis; and
a pattern identifier configured to identify a pattern of a graph shape based on the first area.

14. A data processing system in which a terminal apparatus and an information processing system communicate with each other via a network, the data processing system comprising:

a data acquirer configured to acquire data with which at least one of a year, a month, a date, an hour, a minute, or a second is associated;
a data processor configured to extract at least one analysis target from the data acquired by the data acquirer;
a graph creator configured to create a graph of a cumulative value of a value relating to the analysis target with respect to a period;
an area calculator configured to calculate a first area formed by the graph and an x-axis; and
a pattern identifier configured to identify a pattern of a graph shape based on the first area.

# FIG.1

THESIS

TEXT ANALYSIS

NUMERICAL CONVERSION / SCORE CONVERSION

FIG.2

RESEARCH AND DEVELOPMENT

COMMERCIALIZATION (PRODUCT/SERVICE)

HYPE CYCLE

ACQUIRE VALIDITY

PRODUCT LIFE CYCLE

COMMODITY CONVERSION

201

202

203

EARLY DAYS

EXCESSIVE EXPECTATION

DISILLUSION PERIOD

ENLIGHTENMENT PERIOD

PRODUCTION STABILIZATION PERIOD

INTRODUCTION PERIOD

INTRODUCTION PERIOD

MATURITY PERIOD

DECLINATION PERIOD

TIME

EP 4 432 118 A1

# FIG.3A

| | 1998 | ... | 2011 | 2012 | 2013 | 2014 | 2015 | 2016 | 2017 | 2018 | 2019 | 2020 |
|---|---|---|---|---|---|---|---|---|---|---|---|---|
| carbon fiber | 213 | ... | 645 | 731 | 745 | 896 | 973 | 1123 | 1093 | 1242 | 1568 | 1610 |
| mechanical property | 23 | ... | 94 | 87 | 90 | 97 | 118 | 154 | 154 | 160 | 224 | 208 |
| composite material | 64 | ... | 132 | 164 | 117 | 186 | 154 | 128 | 167 | 186 | 172 | 158 |
| carbon fiber composite | 58 | ... | 139 | 158 | 173 | 209 | 198 | 214 | 231 | 234 | 315 | 278 |
| cfrp composite | 8 | ... | 61 | 75 | 74 | 74 | 96 | 94 | 136 | 108 | 149 | 164 |
| ... | ... | ... | ... | ... | ... | ... | ... | ... | ... | ... | ... | ... |
| hilbert-huang transform | 0 | ... | 1 | 0 | 0 | 0 | 0 | 2 | 0 | 0 | 1 | 1 |
| materiale compuesto | 0 | ... | 0 | 0 | 0 | 1 | 0 | 0 | 1 | 0 | 0 | 0 |
| 12th int | 0 | ... | 0 | 0 | 0 | 1 | 1 | 0 | 0 | 0 | 1 | 0 |
| en aw | 0 | ... | 0 | 1 | 1 | 1 | 1 | 0 | 2 | 0 | 0 | 0 |
| rktem kunststoff | 0 | ... | 0 | 0 | 0 | 0 | 0 | 2 | 0 | 0 | 0 | 0 |

# FIG.3B-1

international
scientific conference camstech
(S=0.01613)

# FIG.3B-2

peek/carbon composite
(S=0.89247)

# FIG.3C

# FIG.4A

# FIG.4B

# FIG.5

EP 4 432 118 A1

# FIG.6

100

| TERMINAL APPARATUS | 30 |
|---|---|
| COMMUNICATION UNIT | 31 |
| DISPLAY CONTROL UNIT | 32 |
| OPERATION RECEIVING UNIT | 33 |

| INFORMATION PROCESSING SYSTEM | 10 |
|---|---|
| COMMUNICATION UNIT | 11 |
| DATA ACQUIRING UNIT | 12 |
| DATA PROCESSING UNIT | 13 |
| APPEARANCE FREQUENCY CALCULATING UNIT | 14 |
| NORMALIZING UNIT | 15 |
| GRAPH CREATING UNIT | 16 |
| AREA CALCULATING UNIT | 17 |
| PATTERN IDENTIFYING UNIT | 18 |
| SCREEN GENERATING UNIT | 19 |

# FIG.7

EP 4 432 118 A1

| | 1989 | 1990 | 1991 | 1992 | 1993 | 1994 | 1995 | 1996 | 1997 | 1998 | ... | 2011 | 2012 | 2013 | 2014 | 2015 | 2016 | 2017 | 2018 | 2019 | 2020 |
|---|---|---|---|---|---|---|---|---|---|---|---|---|---|---|---|---|---|---|---|---|---|
| carbon fiber | 0 | 114 | 161 | 146 | 198 | 187 | 168 | 227 | 205 | 213 | ... | 645 | 731 | 745 | 896 | 973 | 1123 | 1093 | 1242 | 1568 | 1610 |
| mechanical property | 0 | 8 | 11 | 17 | 23 | 30 | 17 | 25 | 24 | 23 | ... | 94 | 87 | 90 | 97 | 118 | 154 | 154 | 160 | 224 | 208 |
| composite material | 0 | 34 | 46 | 49 | 61 | 40 | 55 | 63 | 56 | 64 | ... | 132 | 164 | 117 | 186 | 154 | 128 | 167 | 186 | 172 | 158 |
| carbon fiber composite | 0 | 37 | 43 | 33 | 35 | 28 | 29 | 59 | 54 | 58 | ... | 139 | 158 | 173 | 209 | 198 | 214 | 231 | 234 | 315 | 278 |
| cfrp composite | 0 | 2 | 2 | 0 | 5 | 3 | 9 | 10 | 4 | 8 | ... | 61 | 75 | 74 | 74 | 96 | 94 | 136 | 108 | 149 | 164 |
| ... | ... | ... | ... | ... | ... | ... | ... | ... | ... | ... | ... | ... | ... | ... | ... | ... | ... | ... | ... | ... | ... |
| hilbert-huang transform | 0 | 0 | 0 | 0 | 0 | 0 | 0 | 0 | 0 | 0 | ... | 1 | 0 | 0 | 0 | 0 | 2 | 0 | 0 | 1 | 1 |
| materiale compuesto | 0 | 0 | 0 | 0 | 0 | 0 | 0 | 0 | 0 | 0 | ... | 0 | 0 | 0 | 1 | 0 | 0 | 1 | 0 | 0 | 0 |
| 12th int | 0 | 0 | 0 | 0 | 0 | 0 | 0 | 0 | 0 | 0 | ... | 0 | 0 | 0 | 1 | 1 | 0 | 0 | 0 | 1 | 0 |
| en aw | 0 | 0 | 0 | 0 | 0 | 0 | 0 | 0 | 0 | 0 | ... | 0 | 1 | 1 | 1 | 1 | 0 | 2 | 0 | 0 | 0 |
| rktem kunststoff | 0 | 0 | 0 | 0 | 0 | 0 | 0 | 0 | 1 | 0 | ... | 0 | 0 | 0 | 0 | 0 | 2 | 0 | 0 | 0 | 0 |

6398 rows × 32 columns

# FIG.8

| | 1989 | 1990 | 1991 | 1992 | 1993 | 1994 | 1995 | 1996 | 1997 | 1998 | ... | 2011 | 2012 | 2013 | 2014 | 2015 | 2016 | 2017 | 2018 | 2019 | 2020 |
|---|---|---|---|---|---|---|---|---|---|---|---|---|---|---|---|---|---|---|---|---|---|
| carbon fiber | 0 | 114 | 275 | 421 | 619 | 806 | 974 | 1201 | 1406 | 1619 | ... | 6024 | 6755 | 7500 | 8396 | 9369 | 10492 | 11585 | 12827 | 14395 | 16005 |
| mechanical property | 0 | 8 | 19 | 36 | 59 | 89 | 106 | 131 | 155 | 178 | ... | 891 | 978 | 1068 | 1165 | 1283 | 1437 | 1591 | 1751 | 1975 | 2183 |
| composite material | 0 | 34 | 80 | 129 | 190 | 230 | 285 | 348 | 404 | 468 | ... | 1408 | 1572 | 1689 | 1875 | 2029 | 2157 | 2324 | 2510 | 2682 | 2840 |
| carbon fiber composite | 0 | 37 | 80 | 113 | 148 | 176 | 205 | 264 | 318 | 376 | ... | 1240 | 1398 | 1571 | 1780 | 1978 | 2192 | 2423 | 2657 | 2972 | 3250 |
| cfrp composite | 0 | 2 | 4 | 4 | 9 | 12 | 21 | 31 | 35 | 43 | ... | 422 | 497 | 571 | 645 | 741 | 835 | 971 | 1079 | 1228 | 1392 |
| ... | ... | ... | ... | ... | ... | ... | ... | ... | ... | ... | ... | ... | ... | ... | ... | ... | ... | ... | ... | ... | ... |
| hilbert-huang transform | 0 | 0 | 0 | 0 | 0 | 0 | 0 | 0 | 0 | 0 | ... | 2 | 2 | 2 | 2 | 2 | 4 | 4 | 4 | 5 | 6 |
| materiale compuesto | 0 | 0 | 0 | 0 | 0 | 0 | 0 | 0 | 0 | 0 | ... | 5 | 5 | 5 | 6 | 6 | 6 | 7 | 7 | 7 | 7 |
| 12th int | 0 | 0 | 0 | 0 | 0 | 0 | 0 | 0 | 0 | 0 | ... | 3 | 3 | 3 | 4 | 5 | 5 | 5 | 5 | 6 | 6 |
| en aw | 0 | 0 | 0 | 0 | 0 | 0 | 0 | 0 | 0 | 0 | ... | 0 | 1 | 2 | 3 | 4 | 4 | 6 | 6 | 6 | 6 |
| rktem kunststoff | 0 | 0 | 0 | 0 | 0 | 0 | 0 | 0 | 1 | 1 | ... | 5 | 5 | 5 | 5 | 5 | 7 | 7 | 7 | 7 | 7 |

6398 rows × 32 columns

# FIG.9

| | 1989 | 1990 | 1991 | 1992 | 1993 | 1994 | 1995 | 1996 | 1997 | 1998 | ... | 2011 | 2012 | 2013 | 2014 | 2015 | 2016 | 2017 | 2018 | 2019 | 2020 |
|---|---|---|---|---|---|---|---|---|---|---|---|---|---|---|---|---|---|---|---|---|---|
| carbon fiber | 0.0 | 0.007123 | 0.017182 | 0.026304 | 0.038675 | 0.050359 | 0.060856 | 0.075039 | 0.087848 | 0.101156 | ... | 0.376382 | 0.422056 | 0.468604 | 0.524586 | 0.585380 | 0.655545 | 0.723836 | 0.801437 | 0.899406 | 1.0 |
| mechanical property | 0.0 | 0.003665 | 0.008704 | 0.016491 | 0.027027 | 0.040770 | 0.048557 | 0.060009 | 0.071003 | 0.081539 | ... | 0.408154 | 0.448007 | 0.489235 | 0.533669 | 0.587723 | 0.658268 | 0.728814 | 0.802107 | 0.904718 | 1.0 |
| composite material | 0.0 | 0.011972 | 0.028169 | 0.045423 | 0.066901 | 0.080986 | 0.100352 | 0.122535 | 0.142254 | 0.164789 | ... | 0.495775 | 0.553521 | 0.594718 | 0.660211 | 0.714437 | 0.759507 | 0.818310 | 0.883803 | 0.944366 | 1.0 |
| carbon fiber composite | 0.0 | 0.011385 | 0.024615 | 0.034769 | 0.045538 | 0.054154 | 0.063077 | 0.081231 | 0.097846 | 0.115692 | ... | 0.381538 | 0.430154 | 0.483385 | 0.547692 | 0.608615 | 0.674462 | 0.745538 | 0.817538 | 0.914462 | 1.0 |
| cfrp composite | 0.0 | 0.001437 | 0.002874 | 0.002874 | 0.006466 | 0.008621 | 0.015086 | 0.022270 | 0.025144 | 0.030891 | ... | 0.303161 | 0.357040 | 0.410201 | 0.463362 | 0.532328 | 0.599856 | 0.697557 | 0.775144 | 0.882184 | 1.0 |
| ... | ... | ... | ... | ... | ... | ... | ... | ... | ... | ... | ... | ... | ... | ... | ... | ... | ... | ... | ... | ... | ... |
| hilbert-huang transform | 0.0 | 0.000000 | 0.000000 | 0.000000 | 0.000000 | 0.000000 | 0.000000 | 0.000000 | 0.000000 | 0.000000 | ... | 0.333333 | 0.333333 | 0.333333 | 0.333333 | 0.333333 | 0.666667 | 0.666667 | 0.666667 | 0.833333 | 1.0 |
| materiale compuesto | 0.0 | 0.000000 | 0.000000 | 0.000000 | 0.000000 | 0.000000 | 0.000000 | 0.000000 | 0.000000 | 0.000000 | ... | 0.714286 | 0.714286 | 0.714286 | 0.857143 | 0.857143 | 0.857143 | 1.000000 | 1.000000 | 1.000000 | 1.0 |
| 12th int | 0.0 | 0.000000 | 0.000000 | 0.000000 | 0.000000 | 0.000000 | 0.000000 | 0.000000 | 0.000000 | 0.000000 | ... | 0.500000 | 0.500000 | 0.500000 | 0.666667 | 0.833333 | 0.833333 | 0.833333 | 0.833333 | 1.000000 | 1.0 |
| en aw | 0.0 | 0.000000 | 0.000000 | 0.000000 | 0.000000 | 0.000000 | 0.000000 | 0.000000 | 0.000000 | 0.000000 | ... | 0.000000 | 0.166667 | 0.333333 | 0.500000 | 0.666667 | 0.666667 | 1.000000 | 1.000000 | 1.000000 | 1.0 |
| rktem kunststoff | 0.0 | 0.000000 | 0.000000 | 0.000000 | 0.000000 | 0.000000 | 0.000000 | 0.000000 | 0.142857 | 0.142857 | ... | 0.714286 | 0.714286 | 0.714286 | 0.714286 | 0.714286 | 1.000000 | 1.000000 | 1.000000 | 1.000000 | 1.0 |

6398 rows × 32 columns

EP 4 432 118 A1

FIG.11A  international scientific conference camstech (S=0.01613)

FIG.11B  peek/carbon composite (S=0.89247)

FIG.12

(GRAPH a)    (GRAPH b)    (GRAPH c)    (GRAPH d)    (GRAPH e)

(0.5,0.475)    (0.5,0.428)    (0.5,0.383)    (0.5,0.333)    (0.5,0.273)

(GRAPH f)    (GRAPH g)    (GRAPH h)    (GRAPH i)    (GRAPH j)

FIG.13A

FIG.13B

EP 4 432 118 A1

# FIG.14

Standard Curves

FIG.15

FIG.16A

FIG.16B

CFRP, 7.316 keywords with #appearnace >= 10

CFRP, 7.316 keywords

WORD: carbon fiber ~261

APPEARANCE
FREQUENCY: 35 ~ 262

FIRST APPEARANCE
YEAR: 1986 ~ 263

EP 4 432 118 A1

# FIG.17

9
USER

30
TERMINAL APPARATUS

10
INFORMATION PROCESSING SYSTEM

START ANALYSIS
S1

REQUEST ANALYSIS
S2

S3
ACQUIRE DATA

S4
PERFORM MORPHOLOGICAL ANALYSIS ON DATA, AND CALCULATE APPEARANCE FREQUENCY IN EACH UNIT PERIOD FOR EACH KEYWORD

S5
NORMALIZE PERIOD AND CUMULATIVE VALUE OF APPEARANCE FREQUENCY TO 0 TO 1, RESPECTIVELY

S6
CONVERT CUMULATIVE VALUE OF APPEARANCE FREQUENCY WITH RESPECT TO PERIOD INTO GRAPH (WORD APPEARANCE FREQUENCY GRAPH)

S7
CREATE SQUARE FUNCTION OF ABOVE GRAPH

S8
CALCULATE AREA A1 FORMED BY WORD APPEARANCE FREQUENCY GRAPH AND x-AXIS, AND AREA A2 FORMED BY SQUARE FUNCTION AND x-AXIS, RESPECTIVELY

S9
CONVERT AREA A2 INTO AREA B2

S10
ARRANGE DATA POINTS OF AREAS A1 AND B2 ON SCATTER DIAGRAM (EYE MAP)

EYE MAP
S11

S12
DISPLAY EYE MAP

FIG.18

| KEYWORD | FIRST APPEARANCE YEAR | TOTAL APPEARANCE FREQUENCY | A1 | A2 |
|---|---|---|---|---|
| coral concrete | 2018 | 10 | 0.032258065 | 0.003673257 |
| printed carbon fiber | 2017 | 17 | 0.033206831 | 0.003550673 |
| minimum quantity lubrication | 2018 | 10 | 0.035483871 | 0.006144641 |
| 3d printed carbon fiber | 2017 | 14 | 0.036866359 | 0.003764149 |
| local defect resonance | 2018 | 11 | 0.039589443 | 0.008880428 |
| composite material performance | 2018 | 14 | 0.041474654 | 0.006546115 |
| printed carbon | 2017 | 20 | 0.041935484 | 0.002830385 |
| fdm | 2016 | 21 | 0.0453149 | 0.004514206 |
| seawater sea sand concrete | 2016 | 17 | 0.052182163 | 0.000842998 |
| 3d printed continuou carbon fiber | 2016 | 25 | 0.053548387 | 0.002321124 |
| sea sand | 2016 | 23 | 0.053997195 | 0.002124687 |
| nanofiber z | 2016 | 11 | 0.057184751 | 0.001897344 |
| gray relational analysis | 2016 | 10 | 0.058064516 | 0.003152966 |
| relational analysis | 2016 | 10 | 0.058064516 | 0.003152966 |
| local defect | 2012 | 13 | 0.058312655 | 0.002642249 |
| recyclable carbon fiber | 2015 | 12 | 0.059139785 | 0.001835472 |
| 3d printing | 2014 | 89 | 0.059260602 | 0.002429575 |
| used filament | 2016 | 20 | 0.062903226 | 0.005682882 |
| low frequency vibration | 2014 | 11 | 0.063049853 | 0.005010492 |
| structural lithium ion battery | 2017 | 12 | 0.064516129 | 0.010015609 |

EP 4 432 118 A1

# FIG.19A

CFRP

| | NUMBER OF INSTANCES | RATE IN TOP 100 WORDS |
|---|---|---|
| SIGN (TREND) | 48 | 48% |
| SIGN (FUTURE) | 19 | 19% |
| TOTAL | 67 | 67% |

# FIG.19B

QUANTUM COMPUTER

| | NUMBER OF INSTANCES | RATE IN TOP 100 WORDS |
|---|---|---|
| SIGN (TREND) | 52 | 52% |
| SIGN (FUTURE) | 12 | 12% |
| TOTAL | 64 | 64% |

FIG.20B

A1=9.733333, B2=-0.0207407

FIG.20A

UTS

FIG.21A

FIG.21B

A1=0.28, B2=0.0415407

EST

# FIG.22

EP 4 432 118 A1

**EUROPEAN SEARCH REPORT**

Application Number

EP 24 16 0014

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Bobbitt Zach: "How to Create a Cumulative Sum Chart in Excel (With Example)", , 26 May 2022 (2022-05-26), pages 1-4, XP093176833, Retrieved from the Internet: URL:https://www.statology.org/cumulative-sum-chart-excel/ * page 1 - page 3 * ----- | 1-14 | INV. G06F16/2458 G06F16/9038 |

TECHNICAL FIELDS
SEARCHED        (IPC)

G06F

The present search report has been drawn up for all claims

| Place of search | Date of completion of the search | Examiner |
|---|---|---|
| The Hague | 19 June 2024 | Hackelbusch, Richard |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019101591 A